# EUROPEAN PATENT APPLICATION

(11) **EP 4 572 269 A1**
(43) Date of publication of application: **18.06.2025**
(21) Application number: 22955007.4
(22) Date of filing: 10.08.2022
(51) Int. Cl.: H04L 27/26

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/030672
(87) International publication number: WO 2024/034091

(57) **Abstract**

A terminal according to one aspect of the present disclosure includes a receiving section that receives downlink control information (DCI) for scheduling an uplink shared channel, and a control section that selects an antenna port indication table related to a demodulation reference signal (DMRS) port indication for the uplink shared channel from a plurality of tables with respect to a certain rank, based on a specific field of the DCI. According to one aspect of the present disclosure, a DMRS port can be properly determined.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In preparation for future radio communication systems (for example, Rel-18 NR), a demodulation reference signal (DeModulation Reference Signal (DMRS)) port for an uplink shared channel (Physical Uplink Shared Channel (PUSCH)) that can handle the number of layers larger than four is under study. Increasing the number of orthogonal DMRS ports for a PUSCH/downlink shared channel (Physical Downlink Shared Channel (PDSCH)) is also under study in preparation for Rel-18 NR. A new DMRS port that is different from such an existing DMRS port (also referred to as an Rel-15 DMRS port) is also referred to as an Rel-18 DMRS port.

However, when the Rel-18 DMRS ports are introduced, how to indicate an antenna port, how to switch to the Rel-15 DMRS port, etc., have not been fully studied. If these studies are insufficient, the DMRS port may not be properly indicated, which may result in lower communication throughput.

One of the objectives of the present disclosure is therefore to provide a terminal, a radio communication method and a base station that can properly determine the DMRS port.

### Solution to Problem

A terminal according to one aspect of the present disclosure includes a receiving section that receives downlink control information (DCI) for scheduling an uplink shared channel, and a control section that selects an antenna port indication table related to a demodulation reference signal (DMRS) port indication for the uplink shared channel from a plurality of tables with respect to a certain rank, based on a specific field of the DCI. Advantageous Effects of Invention

According to one aspect of the present disclosure, the DMRS port can be properly determined.

### Brief Description of Drawings

[FIG. 1] FIG. 1 is a diagram to show an example of parameters for a PDSCH DMRS.
[FIG. 2] FIG. 2 is a diagram to show an example of parameters for a PUSCH DMRS.
[FIG. 3] FIGS. 3A through 3D are diagrams to show an example of a table of an antenna port to be referenced when a transform precoder is disabled, a DMRS type = 1, and a maximum length of the DMRS = 1 in Rel. 15.
[FIG. 4] FIGS. 4A through 4D are diagrams to show an example of the table of the antenna port to be referenced when the transform precoder is disabled, the DMRS type = 1, and the maximum length of the DMRS = 2 in Rel. 15.
[FIG. 5] FIGS. 5A through 5D are diagrams to show an example of the table of the antenna port to be referenced when the transform precoder is disabled, the DMRS type = 2, and the maximum length of the DMRS = 1 in Rel. 15.
[FIG. 6] FIGS. 6A and 6B are diagrams to show an example of the table of the antenna port to be referenced when the transform precoder is disabled, the DMRS type = 2, and the maximum length of the DMRS = 2 in Rel. 15.
[FIG. 7] FIGS. 7A and 7B are diagrams to show an example of the table of the antenna port to be referenced when the transform precoder is disabled, the DMRS type = 2, and the maximum length of the DMRS = 2 in Rel. 15.
[FIG. 8] FIGS. 8A through 8D are diagrams to show an example of the table of the antenna port to be referenced when the transform precoder is disabled, the DMRS type = 1, and the maximum length of the DMRS = 2.
[FIG. 9] FIGS. 9A and 9B are diagrams to show an example of the table of the antenna port to be referenced when the transform precoder is disabled, the DMRS type = 2, and the maximum length of the DMRS = 1.
[FIG. 10] FIGS. 10A through 10D are diagrams to show an example of the table of the antenna port to be referenced when the transform precoder is disabled, the DMRS type = 2, and the maximum length of the DMRS = 2.
[FIG. 11] FIGS. 11A and 11B are diagrams to show an example of a size of an antenna ports field in a first embodiment.
[FIG. 12] FIG. 12 is a diagram to show an example of the size of the antenna ports field in a second embodiment.
[FIG. 13] FIGS. 13A and 13B are diagrams to show an example of the size of the antenna ports field in the second embodiment.
[FIG. 14] FIG. 14 is a diagram to show an example of the table of the antenna port to be referenced with respect to the PDSCH DMRS in the case in which a DMRS configuration type = 1, and the maximum length of DMRS = 1 in Rel. 15.
[FIG. 15] FIG. 15 is a diagram to show an example of the parameters for DMRS configuration type 1 with respect to an Rel-18 DMRS.
[FIG. 16] FIG. 16 is a diagram to show an example of the parameters for DMRS configuration type 2 with respect to the Rel-18 DMRS.
[FIG. 17] FIG. 17 is a diagram to show an example of the table of the antenna port to be referenced with respect to the PDSCH DMRS in the case in which the DMRS configuration type = 1, and the maximum length of DMRS = 1, according to Embodiment 3.1.
[FIG. 18] FIG. 18 is a diagram to show an example of the table of the antenna port to be referenced with respect to the PDSCH DMRS in the case in which the DMRS configuration type = 1, and the maximum length of DMRS = 1, according to Embodiment 3.1.
[FIG. 19] FIG. 19 is a diagram to show an example of the table of the antenna port to be referenced with respect to the PDSCH DMRS in the case in which the DMRS configuration type = 1, and the maximum length of DMRS = 1, according to Embodiment 3.2.
[FIG. 20] FIG. 20 is a diagram to show an example of the table of the antenna port to be referenced with respect to the PDSCH DMRS in the case in which the DMRS configuration type = 1, and the maximum length of DMRS = 1, according to Embodiment 3.2.
[FIG. 21] FIG. 21 is a diagram to show an example of the table of the antenna port to be referenced with respect to the PDSCH DMRS in the case in which the DMRS configuration type = 1, and the maximum length of DMRS = 1, according to Embodiment 3.3.
[FIG. 22] FIG. 22 is a diagram to show an example of the table of the antenna port to be referenced with respect to the PDSCH DMRS in the case in which the DMRS configuration type = 1, and the maximum length of DMRS = 1, according to Embodiment 3.3.
[FIG. 23] FIGS. 23A and 23B are diagrams to show an example of a correspondence relation between a value of the antenna ports field and a corresponding DMRS port with respect to DMRS port indication method 2 according to a third embodiment.
[FIG. 24] FIGS. 24A and 24B are diagrams to show an example of the correspondence relation between the value of the antenna ports field and the corresponding DMRS port with respect to DMRS port indication method 3 according to the third embodiment.
[FIG. 25] FIGS. 25A and 25B are diagrams to show an example of the correspondence relation between the value of the antenna ports field and the corresponding DMRS port with respect to DMRS port indication method 4 according to the third embodiment.
[FIG. 26] FIG. 26 is a diagram to show an example of the table of the antenna port to be referenced with respect to the PUSCH DMRS in the case in which the DMRS configuration type = 1, the maximum length of DMRS = 1, and a rank = 1, according to Embodiment 4.1.
[FIG. 27] FIG. 27 is a diagram to show an example of the table of the antenna port to be referenced with respect to the PUSCH DMRS in the case in which the DMRS configuration type = 1, the maximum length of DMRS = 1, and the rank = 2, according to Embodiment 4.1.
[FIG. 28] FIG. 28 is a diagram to show an example of the table of the antenna port to be referenced with respect to the PUSCH DMRS in the case in which the DMRS configuration type = 1, the maximum length of DMRS = 1, and the rank = 3, according to Embodiment 4.1.
[FIG. 29] FIG. 29 is a diagram to show an example of the table of the antenna port to be referenced with respect to the PUSCH DMRS in the case in which the DMRS configuration type = 1, the maximum length of DMRS = 1, and the rank = 4, according to Embodiment 4.1.
[FIG. 30] FIG. 30 is a diagram to show an example of switching an antenna port indication table based on DCI according to a fifth embodiment.
[FIG. 31] FIG. 31 is a diagram to show an example of a schematic configuration of a radio communication system according to one embodiment.
[FIG. 32] FIG. 32 is a diagram to show an example of a configuration of a base station according to one embodiment.
[FIG. 33] FIG. 33 is a diagram to show an example of a configuration of a user terminal according to one embodiment.
[FIG. 34] FIG. 34 is a diagram to show an example of a hardware configuration of the base station and the user terminal according to one embodiment.
[FIG. 35] FIG. 35 is a diagram to show an example of a vehicle according to one embodiment.

### Description of Embodiments

### (Control of Transmission of an SRS and a PUSCH)

In Rel-15 NR, a terminal (user terminal) or user equipment (UE) may receive information that is used to transmit a reference signal for measurement (for example, sounding reference signal (SRS)) (SRS configuration information, for example, a parameter in an "SRS-Config" of an RRC control element).

Specifically, the UE may receive at least one of information related to one or more SRS resource sets (SRS resource set information, for example, an "SRS-ResourceSet" of the RRC control element) and information related to one or more SRS resources (SRS resource information, for example, an "SRS-Resource" of the RRC control element).

One SRS resource set may be associated with a certain number of the SRS resources (a certain number of the SRS resources may be grouped together). Each of the SRS resources may be specified by an SRS resource indicator (SRI) or an SRS resource ID (Identifier).

The SRS resource set information may include information on an SRS resource set ID (SRS-ResourceSetId), a list of the SRS resource IDs (SRS-ResourceIds) that are used in such a resource set, an SRS resource type or a usage of the SRS.

Here, the SRS resource type may indicate either a periodic SRS (P-SRS), a semi-persistent SRS (SP-SRS) or an aperiodic SRS (Aperiodic SRS (A-SRS)). Note that the UE may periodically transmit the P-SRS and the SP-SRS (or periodically after activation) and may transmit the A-SRS based on an SRS request of downlink control information (DCI).

The usage (the "usage" of an RRC parameter and an "SRS-SetUse" of an L1 (Layer-1) parameter) may be, for example, beam management (beamManagement), a codebook (CB), a noncodebook (NCB), antenna switching, etc. The SRS for the codebook or the non-codebook usage may be used to determine a precoder of a codebook-based or non-codebook-based uplink shared channel (Physical Uplink Shared Channel (PUSCH)) transmission based on the SRI.

For example, the UE, in the case of a codebook-based transmission, may determine the precoder (precoding matrix) for a PUSCH transmission based on the SRI, a transmission rank, which may be simply referred to as a rank, and a transmitted precoding matrix indicator (TPMI). The UE, in the case of non-codebook-based transmission, may determine the precoder for the PUSCH transmission based on the SRI.

The SRS resource information may include the SRS resource ID (SRS-ResourceId), the number of SRS ports, an SRS port number, a transmission Comb, SRS resource mapping (for example, a time and/or frequency resource location, a resource offset, the period of a resource, the number of repetitions, the number of SRS symbols, an SRS bandwidth, etc.), hopping relation information, the SRS resource type, a series ID, spatial relation information of the SRS, etc.

The spatial relation information of the SRS (for example, a "spatialRelationInfo" of an RRC information element) may indicate the spatial relation information between a certain reference signal and the SRS. Such a certain reference signal may be at least one of a synchronization signal/broadcast channel (Synchronization Signal/Physical Broadcast Channel (SS/PBCH)) block, a channel state information reference signal (CSI-RS) and the SRS (for example, another SRS). The SS/PBCH block may be referred to as a synchronization signal block (SSB).

The spatial relation information of the SRS may include at least one of an SSB index, a CSI-RS resource ID and the SRS resource ID as an index of the certain reference signal described above.

Note that in the present disclosure, SSB Index, SSB resource ID and SSB resource indicator (SSBRI) may be interchangeably read with each other. CSI-RS index, CSI-RS resource ID and CSI-RS resource indicator (CRI) may also be interchangeably read with each other. SRS index, SRS resource ID and SRI may also be interchangeably read with each other.

The spatial relation information of the SRS may include a serving cell index, a BWP index (BWP ID), etc., that correspond to the certain reference signal described above.

When the spatial relation information related to the SSB or the CSI-RS and the SRS is configured for a certain SRS resource, the UE may transmit such an SRS resource using the same spatial domain filter (spatial domain transmission filter) as the spatial domain filter (spatial domain reception filter) for the reception of such an SSB or CSI-RS. In this case, the UE may assume that the UE reception beam of the SSB or the CSI-RS and the UE transmission beam of the SRS are the same.

When the spatial relation information related to another SRS (reference SRS) and such an SRS (target SRS) is configured for a certain SRS (target SRS) resource, the UE may transmit the target SRS resource using the same spatial domain filter (spatial domain transmission filter) as the spatial domain filter (spatial domain transmission filter) for the transmission of such a reference SRS. In other words, in this case, the UE may assume that the UE transmission beam of the reference SRS and the UE transmission beam of the target SRS are the same.

The UE may determine the spatial relation of the PUSCH that is scheduled by such DCI based on the value of a certain field (for example, an SRS resource indicator (SRI) field) in the DCI (for example, DCI format 0_1). Specifically, the UE may use the spatial relation information of the SRS resource that is determined based on the value of such a certain field (for example, SRI) (for example, the "spatialRelationInfo" of the RRC information element) for the PUSCH transmission.

In Rel-15/16 NR, when the codebook-based transmission is used for the PUSCH, the UE may be configured for the SRS resource set with the usage of the codebook having two SRS resources at the maximum by the RRC and may be indicated for one of such two SRS resources at the maximum by the DCI (1-bit SRI field). The transmission beam of the PUSCH will be indicated by the SRI field.

The UE may determine the TPMI and the number of layers (transmission rank) for the PUSCH based on precoding information and a layer number field (hereinafter also referred to as precoding information field). The UE may select the precoder from the codebook for an uplink with respect to the same number of ports as the number of SRS ports indicated by "nrofSRS-Ports" of a higher layer parameter that is configured for the SRS resource indicated by the SRI field described above, based on the TPMI, the number of layers, etc., described above.

In Rel-15/16 NR, when the non-codebook-based transmission is used for the PUSCH, the UE may be configured for the SRS resource set with the usage of the noncodebook having four SRS resources at the maximum by the RRC and may be indicated for one or more of such four SRS resources at the maximum by the DCI (2-bit SRI field).

The UE may determine the number of layers (transmission rank) for the PUSCH based on the SRI field described above. For example, the UE may determine that the number of the SRS resources that are indicated by the SRI field described above and the number of layers for the PUSCH are the same. The UE may also calculate the precoder of the SRS resource described above.

When the CSI-RS that is associated with such an SRS resource (or the SRS resource set to which such an SRS resource belongs), which may be referred to as an associated CSI-RS, is configured in the higher layer, the transmission beam of the PUSCH may be calculated based on the (measurement of) such an associated CSI-RS that is configured. Otherwise, the transmission beam of the PUSCH may be indicated by the SRI.

Note that the UE may be configured whether to use a codebook-based PUSCH transmission or a non-codebook-based PUSCH transmission by the higher layer parameter "txConfig," which indicates a transmission scheme. Such a parameter may indicate the value of the "codebook" or the "noncodebook (nonCodebook)."

In the present disclosure, a codebook-based PUSCH (codebook-based PUSCH transmission, codebook-based transmission) may mean the PUSCH in the case in which the UE is configured with the "codebook" as the transmission scheme. In the present disclosure, a non-codebook-based PUSCH (non-codebook-based PUSCH transmission, non-codebook-based transmission) may mean the PUSCH in the case in which the UE is configured with the "noncodebook" as the transmission scheme.

### (DMRS)

A front-loaded DMRS is a first (a first symbol or a symbol near the first symbol) DMRS for faster demodulation. An additional DMRS can be configured by the RRC for fast-moving UE or for a high modulation and coding scheme (MCS)/rank. A frequency position of the additional DMRS is the same as the front-loaded DMRS.

DMRS mapping type A or B is configured for a time domain. In DMRS mapping type **A,** DMRS position l_0 is counted by a symbol index in a slot. l_0 is configured by the parameter (dmrs-TypeA-Position) in an MIB or a common serving cell configuration (ServingCellConfigCommon). DMRS position 0 (reference point l) means the first symbol in the slot or each of frequency hops. In DMRS mapping type B, DMRS position l_0 is counted by the symbol index in a PDSCH/PUSCH. l_0 is always 0. DMRS position 0 (reference point l) means the first symbol of the PDSCH/PUSCH or each of the frequency hops.

A DMRS position is specified by a table of specifications and depends on the duration of the PDSCH/PUSCH. The position of the additional DMRS is fixed.

(PDSCH/PUSCH) DMRS configuration type 1 or type 2 is configured for a frequency domain. DMRS configuration type 1 has a comb structure and can be applied to both cyclic prefix orthogonal frequency division multiplexing (CP-OFDM) and discrete Fourier transform spread OFDM (DFT-s-OFDM). DMRS configuration type 2 can be applied only to the CP-OFDM.

Note that the CP-OFDM may be used when transform precoding, which may be referred to as a transform precoder, is configured to be disabled (the parameter of the transform precoder (for example, transformPrecoder) = "disabled"). The DFT-s-OFDM may be used when the transform precoder is configured to be enabled (the parameter of the transform precoder (for example, transformPrecoder) = "enabled").

A single symbol DMRS or a double symbol DMRS may be configured for the UE.

The single symbol DMRS is normally used (it is a mandatory function in Rel. 15). In the single symbol DMRS, the number of additional DMRSs (symbols) is {0, 1, 2, 3}. The single symbol DMRS supports both cases in which frequency hopping is enabled and disabled. If the maximum number (maxLength) in an uplink DMRS configuration (DMRS-UplinkConfig) is not configured, the single symbol DMRS is used.

The double symbol DMRS is used for more DMRS ports (especially for an MU-MIMO). In the double symbol DMRS, the number of additional DMRSs (symbols) is {0, 1}. The double symbol DMRS supports the case in which the frequency hopping is enabled. If the maximum number (maxLength) in the uplink DMRS configuration (DMRS-UplinkConfig) is 2 (len2), whether to use the single symbol DMRS or the double symbol DMRS is determined by the DCI or by a configured grant.

From the above, the possible configuration patterns of the DMRS are the following combinations:
- DMRS configuration type 1, DMRS mapping type A, single symbol DMRS;
- DMRS configuration type 1, DMRS mapping type A, double symbol DMRS;
- DMRS configuration type 1, DMRS mapping type B, single symbol DMRS;
- DMRS configuration type 1, DMRS mapping type B, double symbol DMRS;
- DMRS configuration type 2, DMRS mapping type A, single symbol DMRS;
- DMRS configuration type 2, DMRS mapping type A, double symbol DMRS;
- DMRS configuration type 2, DMRS mapping type B, single symbol DMRS; and
- DMRS configuration type 2, DMRS mapping type B, double symbol DMRS.

A plurality of DMRS ports that are mapped to the same RE (the resource of time and frequency) are referred to as a DMRS CDM group.

Four DMRS ports can be used for DMRS configuration type 1 and the single symbol DMRS. In each of the DMRS CDM groups, two DMRS ports are multiplexed by an FD OCC with a length of 2. Two DMRS ports are multiplexed by FDM between a plurality of DMRS CDM groups (two DMRS CDM groups).

Eight DMRS ports can be used for DMRS configuration type 1 and the double symbol DMRS. In each of the DMRS CDM groups, two DMRS ports are multiplexed by the FD OCC with a length of 2, and two DMRS ports are multiplexed by a TD OCC. Two DMRS ports are multiplexed by the FDM between the plurality of DMRS CDM groups (two DMRS CDM groups).

Six DMRS ports can be used for DMRS configuration type 2 and the single symbol DMRS. In each of the DMRS CDM groups, two DMRS ports are multiplexed by the FD OCC with a length of 2. Three DMRS ports are multiplexed by the FDM between the plurality of DMRS CDM groups (three DMRS CDM groups).

Twelve DMRS ports can be used for DMRS configuration type 2 and the double symbol DMRS. In each of the DMRS CDM groups, two DMRS ports are multiplexed by the FD OCC with a length of 2, and two DMRS ports are multiplexed by the TD OCC. Three DMRS ports are multiplexed by the FDM between the plurality of DMRS CDM groups (three DMRS CDM groups).

An example of DMRS mapping type B is shown here, but DMRS mapping type A is also the same.

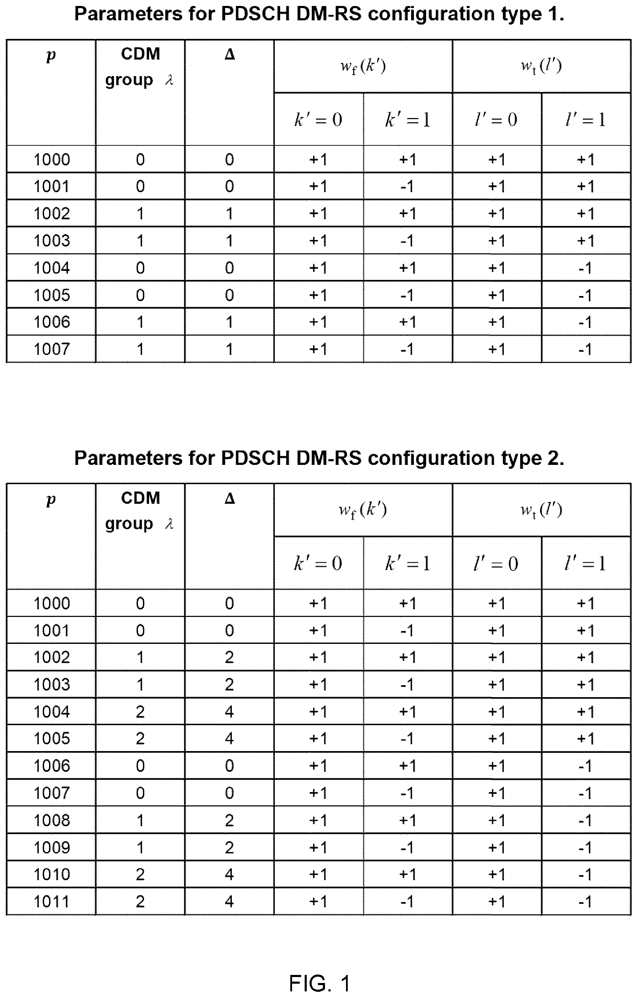

FIG. 1 is a diagram to show an example of the parameters for a PDSCH DMRS. DMRS ports 1000 through 1007 can be used for DMRS configuration type 1, and DMRS ports 1000 through 1011 can be used for DMRS configuration type 2.

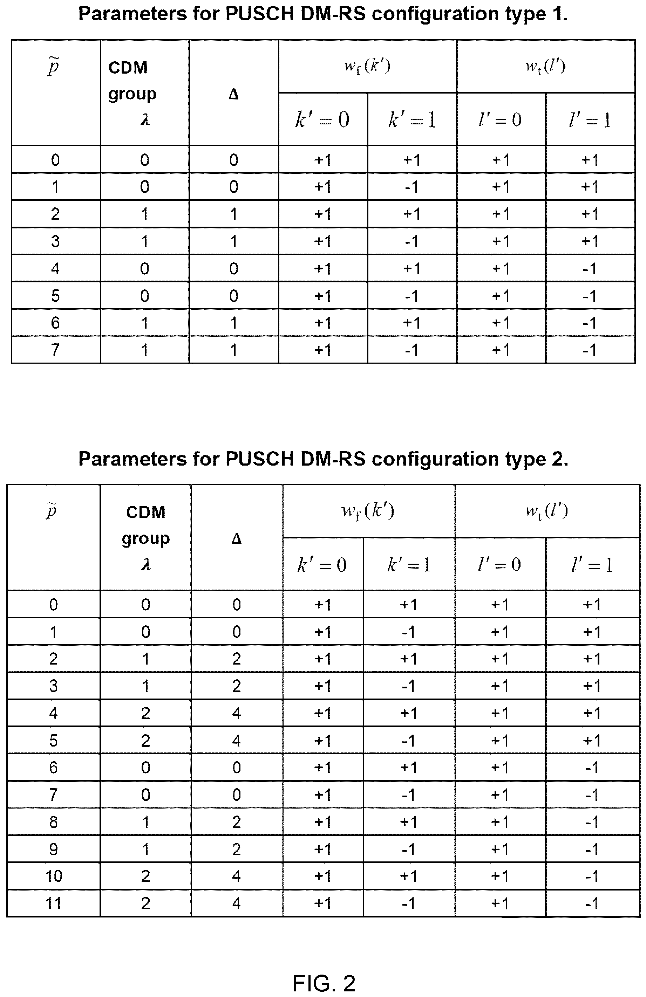

FIG. 2 is a diagram to show an example of the parameters for a PUSCH DMRS. DMRS ports 0 through 7 can be used for DMRS configuration type 1, and DMRS ports 0 through 11 can be used for DMRS configuration type 2.

### (Port of the Reference Signal)

The reference signal of a plurality of ports (for example, a demodulation reference signal (DMRS), CSI-RS) is used for the orthogonalization of a MIMO layer, etc.

For example, for a single user MIMO (SU-MIMO), different DMRS ports/CSI-RS ports may be configured for each of the layers. For the multi user MIMO (MU-MIMO), the different DMRS ports/CSI-RS ports may be configured for each of the layers in one UE and for each UE.

Note that when the number of CSI-RS ports larger than the number of layers that are used for data is used, a more accurate measurement of a channel state is expected to be possible based on this CSI-RS, which will contribute to the improvement of throughput.

In Rel-15 NR, for the DMRS of the plurality of ports, eight ports are supported at the maximum for a type 1 DMRS (in other words, DMRS configuration type 1) and 12 ports at the maximum for a type 2 DMRS (in other words, DMRS configuration type 2) by using the frequency division multiplexing (FDM), the frequency domain orthogonal cover code (FD-OCC), the time domain OCC (TD-OCC), etc.

In Rel-15 NR, a comb-like pattern of a transmission frequency (a comb-like resource set) is used as the FDM described above. A cyclic shift (CS) is used as the FD-OCC described above. The TD-OCC described above can be applied only to the double symbol DMRS.

The OCC in the present disclosure may be interchangeably read with an orthogonal code, orthogonalization, the cyclic shift, etc.

Note that the type of the DMRS may be referred to as the DMRS configuration type.

Out of the DMRSs, the DMRS that is resource mapped per two consecutive (adjacent) symbols may be referred to as the double symbol DMRS, and the DMRS that is resource mapped per one symbol may be referred to as the single symbol DMRS.

Both DMRSs may be mapped to one or more symbols per one slot, depending on the length of a data channel. The DMRS that is mapped to a start position of a data symbol may be referred to as the front-loaded DMRS, and the DMRS that is additionally mapped to a position other than that position may be referred to as the additional DMRS.

In the case of DMRS configuration type 1 and the single symbol DMRS, a Comb and the CS may be used for the orthogonalization. For example, four antenna ports (APs) may be supported at the maximum by using two types of Combs and two types of CSs (Comb2 + 2CS).

In the case of DMRS configuration type 1 and the double symbol DMRS, the Comb, the CS and the TD-OCC may be used for the orthogonalization. For example, eight APs may be supported at the maximum by using two types of Combs, two types of CSs and TD-OCCs ({1, 1} and {1, -1}).

In the case of DMRS configuration type 2 and the single symbol DMRS, the FD-OCC may be used for the orthogonalization. For example, six APs may be supported at the maximum by applying the orthogonal code (2-FD-OCC) to two resource elements (REs) that are adjacent to each other in the frequency direction.

In the case of DMRS configuration type 2 and the double symbol DMRS, the FD-OCC and the TD-OCC may be used for the orthogonalization. For example, 12 APs may be supported at the maximum by applying the orthogonal code (2-FD-OCC) to two REs that are adjacent to each other in the frequency direction and the TD-OCCs ({1, 1} and {1, -1}) to two REs that are adjacent to each other in the time direction.

In Rel-15 NR, for the CSI-RS of the plurality of ports, 32 ports are supported at the maximum by using the FDM, time division multiplexing (TDM), the frequency domain OCC, the time domain OCC, etc. For the orthogonalization of the CSI-RS, a similar method to the DMRS described above may be applied.

In the meantime, a group of DMRS ports that are orthogonalized by the FD-OCC/TD-OCC as described above is also referred to as a code division multiplexing (CDM) group.

Since different CDM groups are FDMed with each other, they are orthogonal. In contrast, within the same CDM group, the orthogonality of the OCC that is applied may collapse due to a channel fluctuation, etc. In this case, if signals in the same CDM group are received at different receiving power, a problem of distance may occur, resulting in the risk of orthogonality not being ensured.

Here, the TD-OCC/FD-OCC of the DMRS in Rel-15 NR is described. The DMRS that is mapped to the resource element (RE) may correspond to the series that is a DMRS series multiplied by the parameter of the FD-OCC, which may be referred to as a series element, etc., w_{f}(k') and the parameter of the TD-OCC, which may be referred to as a series element, wₜ(l').

Both the TD-OCC and the FD-OCC of the DMRS in Rel-15 NR correspond to the OCC with a series length, which may be referred to as an OCC length, = 2. Therefore, the possible values of k' and l' described above are both 0 and 1. The DMRS of two ports can be multiplexed using the same time and frequency resources (2RE) by multiplying this FD-OCC per RE. When both these FD-OCC and TD-OCC are applied, the DMRS of four ports can be multiplexed using the same time and frequency resources (4RE).

Two existing DMRS port tables for the PDSCH shown in FIG. 1 each correspond to DMRS configuration type 1 and type 2. Note that p represents an antenna port number, and Δ represents the parameter for shifting (offsetting) the frequency resource.

For example, antenna ports 1000 and 1001 are orthogonalized using the FD-OCC by applying {w_{f}(0), wᵣ(1)} = {+1, +1} and {w_{f}(0), w_{f}(1)} = {+1, -1}, respectively.

For antenna ports 1000 and 1001 as well as antenna ports 1002 and 1003 (and even antenna ports 1004 and 1005 in the case of type 2), the FDM is applied by applying different values of Δ. Therefore, antenna ports 1000 through 1003 (or 1000 through 1005) that correspond to the single symbol DMRS are orthogonalized using the FD-OCC and the FDM.

Antenna ports 1000 through 1003 of type 1 and antenna ports 1004 through 1007 are orthogonalized using the TD-OCC by applying {wt(0), wₜ(1)} = {+1, +1} and {wt(0), wₜ(1)} = {+1, -1}, respectively. Therefore, antenna ports 1000 through 1007 (or 1000 through 1011) that correspond to the double symbol DMRS are orthogonalized using the FD-OCC, the TD-OCC and the FDM.

Specifying a larger number of the DMRS ports that are orthogonal for the MU-MIMO of a DL/UL (without increasing a DMRS overhead) for only the CP-OFDM, commonly designing between the DMRS of the DL and the UL, and doubling the maximum number of the DMRS ports that are orthogonal for both the single symbol DMRS and the double symbol DMRS for 24 DMRS ports that are orthogonal at the maximum and each of applicable DMRS configuration types are under study.

In Rel. 15, the following cases 1 through 4 can be configured.

### [Case 1] Single symbol DMRS of DMRS configuration type 1

The total number of the DMRS ports is 2 (according to the comb/FDM) x 2 (according to the FD OCC) = 4 ports.

### [Case 2] Double symbol DMRS of DMRS configuration type 1

The total number of the DMRS ports is 2 (according to the comb/FDM) x 2 (according to the FD OCC) x 2 (according to the TD OCC) = 8 ports.

### [Case 3] Single symbol DMRS of DMRS configuration type 2

The total number of the DMRS ports is 3 (according to the FDM) x 2 (according to the FD OCC) = 6 ports.

### [Case 4] Double symbol DMRS of DMRS configuration type 2

The total number of the DMRS ports is 3 (according to the comb) x 2 (according to the FD OCC) x 2 (according to the TD OCC) = 12 ports.

In cases 1 through 4 of Rel. 15, the mapping of the CDM group and a DMRS port index is as follows.

### [Case 1]

Four ports and two CDM groups may be available. For the PUSCH, CDM group #0 may correspond to DMRS port index {0, 1}, and CDM group #1 may correspond to DMRS port index {2, 3}. For the PDSCH, CDM group #0 may correspond to DMRS port index {1000, 1001}, and CDM group #1 may correspond to DMRS port index {1002, 1003}.

### [Case 2]

Eight ports and two CDM groups may be available. For the PUSCH, CDM group #0 may correspond to DMRS port index {0, 1, 4, 5}, and CDM group #1 may correspond to DMRS port index {2, 3, 6, 7}. For the PDSCH, CDM group #0 may correspond to DMRS port index {1000, 1001, 1004, 1005}, and CDM group #1 may correspond to DMRS port index {1002, 1003, 1006, 1007}.

### [Case 3]

Six ports and three CDM groups may be available. For the PUSCH, CDM group #0 may correspond to DMRS port index {0, 1}, CDM group #1 may correspond to DMRS port index {2, 3}, and CDM group #2 may correspond to DMRS port index {4, 5}. For the PDSCH, CDM group #0 may correspond to DMRS port index {1000, 1001}, CDM group #1 may correspond to DMRS port index {1002, 1003}, and CDM group #2 may correspond to DMRS port index {1004, 1005}.

### [Case 4]

Twelve ports and three CDM groups may be available. For the PUSCH, CDM group #0 may correspond to DMRS port index {0, 1, 6, 7}, CDM group #1 may correspond to DMRS port index {2, 3, 8, 9}, and CDM group #2 may correspond to DMRS port index {4, 5, 10, 11}. For the PDSCH, CDM group #0 may correspond to DMRS port index {1000, 1001, 1006, 1007}, CDM group #1 may correspond to DMRS port index {1002, 1003, 1008, 1009}, and CDM group #2 may correspond to DMRS port index {1004, 1005, 1010, 1011}.

### <Table of the Antenna Port in Rel. 15>

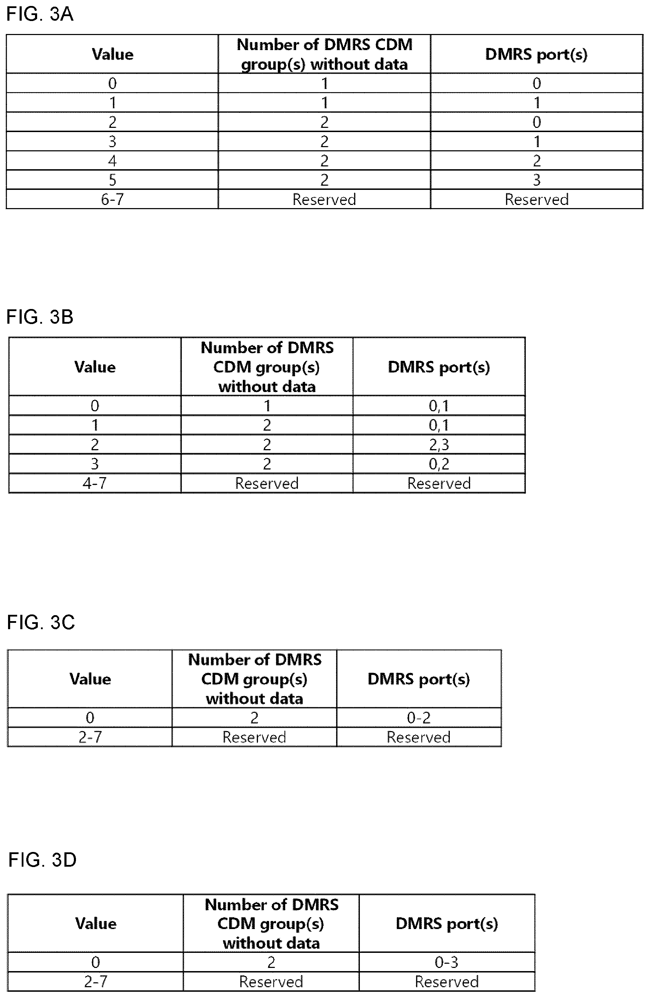

FIGS. 3A through 3D are diagrams to show an example of the table of the antenna port to be referenced when the transform precoder is disabled, a DMRS type = 1, and a maximum length of the DMRS = 1 in Rel. 15.

FIG. 3A is an example of the table of the antenna port that corresponds to rank 1. In the present example, corresponding to the value of an antenna ports field = 0 to 5, each different set of DMRS ports (the number of antenna ports is 1) is associated.

FIG. 3B is an example of the table of the antenna port that corresponds to rank 2. In the present example, corresponding to the value of the antenna ports field = 0 to 3, each different set of DMRS ports (the number of antenna ports is 2) is associated.

FIG. 3C is an example of the table of the antenna port that corresponds to rank 3. In the present example, corresponding to the value of the antenna ports field = 0, each different set of DMRS ports (the number of antenna ports is 3) is associated.

FIG. 3D is an example of the table of the antenna port that corresponds to rank 4. In the present example, corresponding to the value of the antenna ports field = 0, each different set of DMRS ports (the number of antenna ports is 4) is associated.

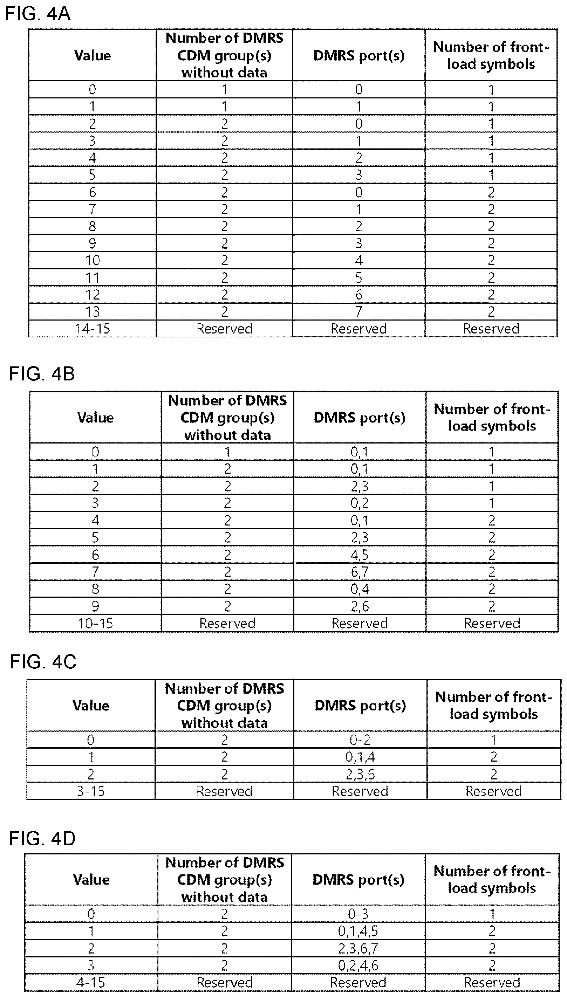

FIGS. 4A through 4D are diagrams to show an example of the table of the antenna port to be referenced when the transform precoder is disabled, the DMRS type = 1, and the maximum length of the DMRS = 2 in Rel. 15.

FIG. 4A is an example of the table of the antenna port that corresponds to rank 1. In the present example, corresponding to the value of the antenna ports field = 0 to 13, each different set of DMRS ports (the number of antenna ports is 1) is associated. Note that a correspondence relation between the value and the content of an entry is not limited to this. Other examples are the same.

FIG. 4B is an example of the table of the antenna port that corresponds to rank 2. In the present example, corresponding to the value of the antenna ports field = 0 to 9, each different set of DMRS ports (the number of antenna ports is 2) is associated.

FIG. 4C is an example of the table of the antenna port that corresponds to rank 3. In the present example, corresponding to the value of the antenna ports field = 0 to 2, each different set of DMRS ports (the number of antenna ports is 3) is associated.

FIG. 4D is an example of the table of the antenna port that corresponds to rank 4. In the present example, corresponding to the value of the antenna ports field = 0 to 3, each different set of DMRS ports (the number of antenna ports is 4) is associated.

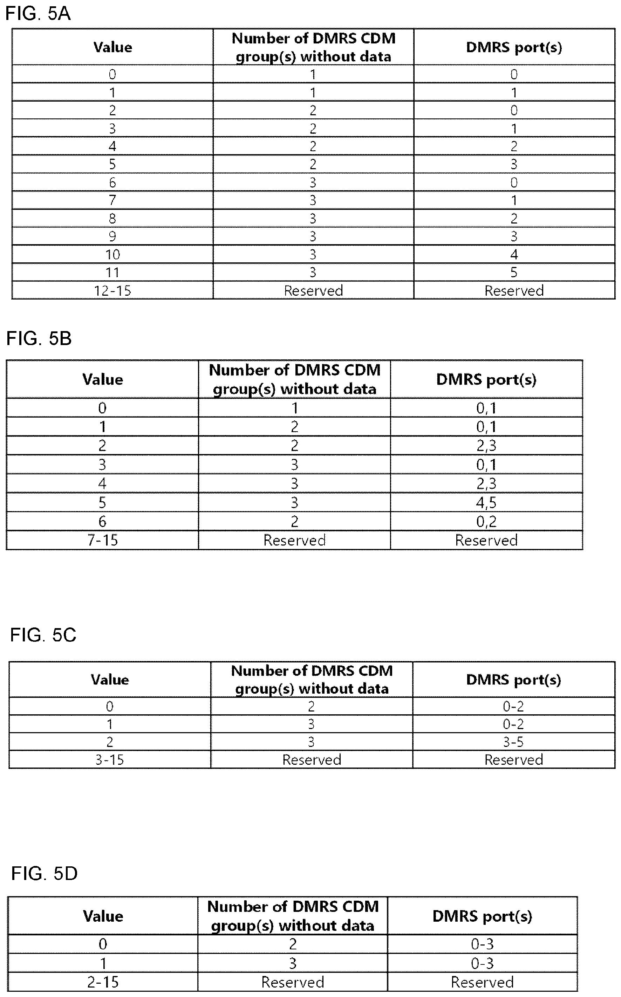

FIGS. 5A through 5D are diagrams to show an example of the table of the antenna port to be referenced when the transform precoder is disabled, the DMRS type = 2, and the maximum length of the DMRS = 1 in Rel. 15.

FIG. 5A is an example of the table of the antenna port that corresponds to rank 1. In the present example, corresponding to the value of the antenna ports field = 0 to 11, each different set of DMRS ports (the number of antenna ports is 1) is associated. Note that the correspondence relation between the value and the content of the entry is not limited to this. Other examples are the same.

FIG. 5B is an example of the table of the antenna port that corresponds to rank 2. In the present example, corresponding to the value of the antenna ports field = 0 to 6, each different set of DMRS ports (the number of antenna ports is 2) is associated.

FIG. 5C is an example of the table of the antenna port that corresponds to rank 3. In the present example, corresponding to the value of the antenna ports field = 0 to 2, each different set of DMRS ports (the number of antenna ports is 3) is associated.

FIG. 5D is an example of the table of the antenna port that corresponds to rank 4. In the present example, corresponding to the value of the antenna ports field = 0 to 1, each different set of DMRS ports (the number of antenna ports is 4) is associated.

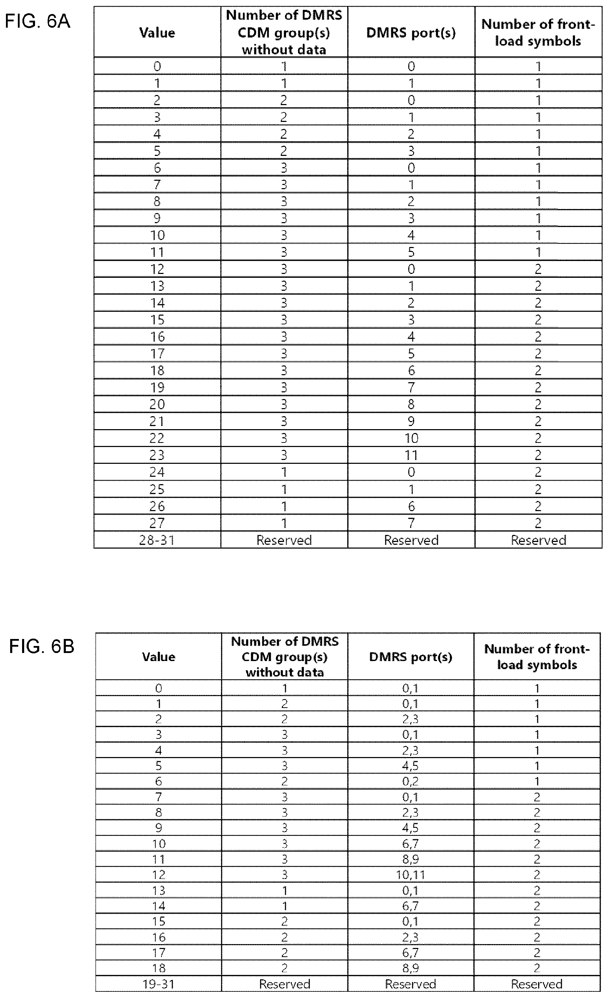

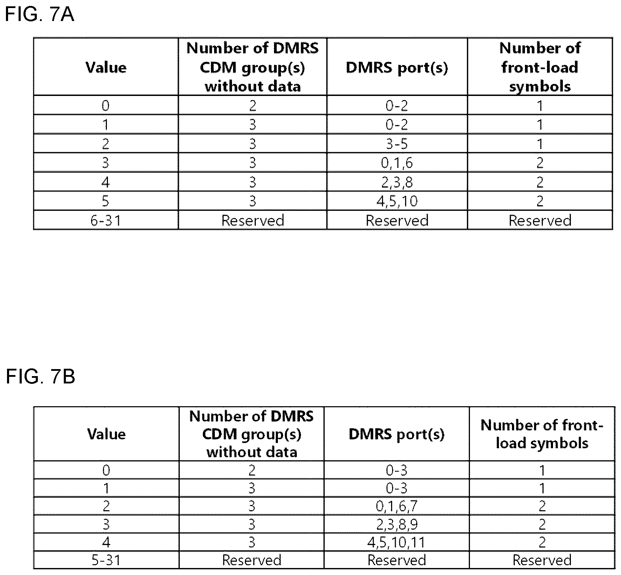

FIGS. 6A, 6B, 7A and 7B are diagrams to show an example of the table of the antenna port to be referenced when the transform precoder is disabled, the DMRS type = 2, and the maximum length of the DMRS = 2 in Rel. 15.

FIG. 6A is an example of the table of the antenna port that corresponds to rank 1. In the present example, corresponding to the value of the antenna ports field = 0 to 27, each different set of DMRS ports (the number of antenna ports is 1) is associated.

FIG. 6B is an example of the table of the antenna port that corresponds to rank 2. In the present example, corresponding to the value of the antenna ports field = 0 to 18, each different set of DMRS ports (the number of antenna ports is 2) is associated.

FIG. 7A is an example of the table of the antenna port that corresponds to rank 3. In the present example, corresponding to the value of the antenna ports field = 0 to 5, each different set of DMRS ports (the number of antenna ports is 3) is associated.

FIG. 7B is an example of the table of the antenna port that corresponds to rank 4. In the present example, corresponding to the value of the antenna ports field = 0 to 4, each different set of DMRS ports (the number of antenna ports is 4) is associated.

### <DMRS Port with the Number of Layers Larger than Four>

An example of the table of the antenna port for a DMRS port indication with the number of layers larger than four when the transform precoder is disabled is described.

For the codebook-based PUSCH, the UE determines the rank (number of layers) for the PUSCH transmission based on the precoding information field of the DCI. For the non-codebook-based PUSCH, the UE determines the rank (number of layers) for the PUSCH transmission based on the SRS resource indicator field of the DCI.

Then, the UE may determine the table of the antenna port that corresponds to the rank that has been determined, based on whether the transform precoder is enabled/disabled and the value of the DMRS type of the PUSCH that is configured by higher layer signaling, which may be configured by an RRC parameter "dmrs-Type," and the maximum length of the DMRS, which may be configured by the RRC parameter "maxLength."

The entry of the table to be referenced (the entry corresponds to the set of the number of CDM groups, an antenna port index of the DMRS, the number of symbols that lead ("Number of front-load symbols"), etc.) may be determined by the value of the antenna ports field of the DCI.

### [In the Case in Which the DMRS Type = 1 and the Maximum Length of the DMRS = 1]

When the DMRS type = 1 and the maximum length of the DMRS = 1, the transmission of up to rank 4 may be supported. In other words, the UE that is configured with the DMRS type = 1 and the maximum length of the DMRS = 1 may not support the transmission higher than rank 4.

### [In the Case in Which the DMRS Type = 1 and the Maximum Length of the DMRS = 2]

When the DMRS type = 1 and the maximum length of the DMRS = 2, the transmission of up to rank 8 may be supported.

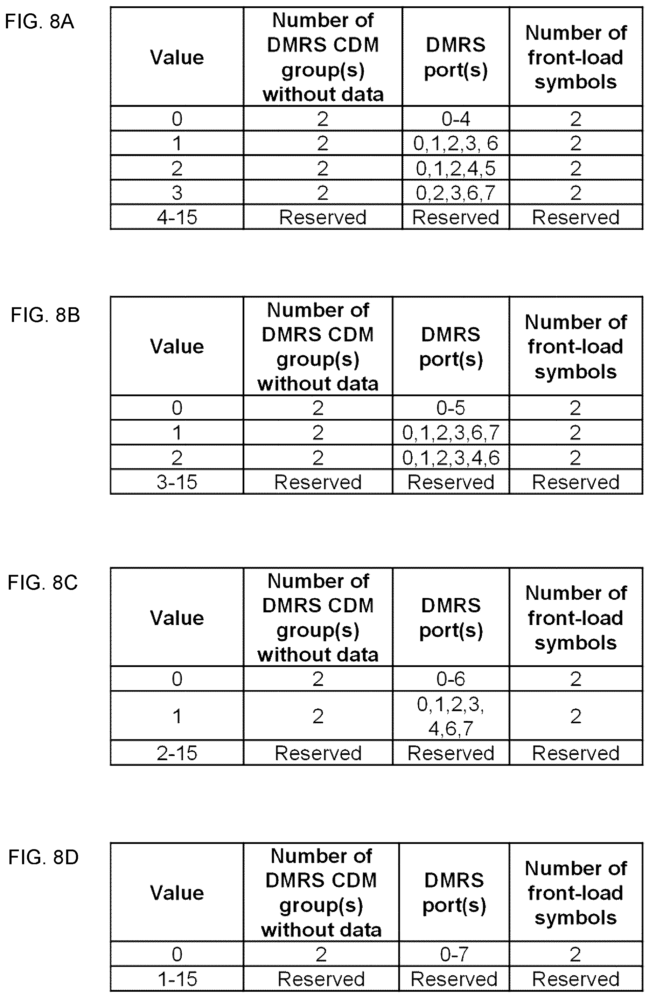

FIGS. 8A through 8D are diagrams to show an example of the table of the antenna port to be referenced when the transform precoder is disabled, the DMRS type = 1, and the maximum length of the DMRS = 2.

FIG. 8A is an example of the table of the antenna port that corresponds to rank 5. In the present example, corresponding to the value of the antenna ports field = 0 to 3, each different set of DMRS ports (the number of antenna ports is 5) is associated. Note that the correspondence relation between the value and the content of the entry is not limited to this. Other examples are the same.

In FIG. 8A, 2 + 3 layers and 3 + 2 layers may be supported. Note that only a part of the entry shown in the diagram may be supported. For example, only the entry of DMRS ports 0 through 4 may be supported for the 2 + 3 layers, and only the entry of DMRS ports 0, 1, 2, 3 and 6 may be supported for the 3 + 2 layers.

FIG. 8B is an example of the table of the antenna port that corresponds to rank 6. In the present example, corresponding to the value of the antenna ports field = 0 to 2, each different set of DMRS ports (the number of antenna ports is 6) is associated.

In FIG. 8B, 4 + 2 layers, 2 + 4 layers and 3 + 3 layers may be supported. Note that only the combination of specific X and Y with respect to X + Y layers (for example, 3 + 3) may be supported.

FIG. 8C is an example of the table of the antenna port that corresponds to rank 7. In the present example, corresponding to the value of the antenna ports field = 0 to 1, each different set of DMRS ports (the number of antenna ports is 7) is associated.

In FIG. 8C, 4 + 3 layers and 3 + 4 layers may be supported.

FIG. 8D is an example of the table of the antenna port that corresponds to rank 8. In the present example, corresponding to the value of the antenna ports field = 0, the set of DMRS ports (the number of antenna ports is 8) is associated.

In FIG. 8D, only 4 + 4 layers may be supported.

### [In the Case in Which the DMRS Type = 2 and the Maximum Length of the DMRS = 1]

When the DMRS type = 2 and the maximum length of the DMRS = 1, the transmission of up to rank 6 may be supported, only the transmission of up to rank 4 may be supported, or the transmission of rank 6 (for example, 4 + 2 layers) may not be supported and only the transmission of up to rank 5 may be supported.

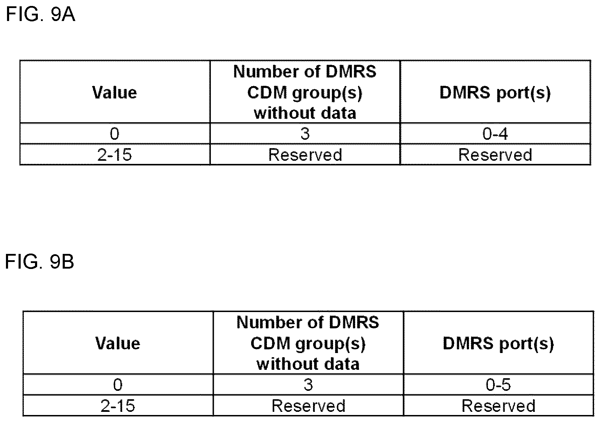

FIGS. 9A and 9B are diagrams to show an example of the table of the antenna port to be referenced when the transform precoder is disabled, the DMRS type = 2, and the maximum length of the DMRS = 1.

FIG. 9A is an example of the table of the antenna port that corresponds to rank 5. In the present example, corresponding to the value of the antenna ports field = 0, the set of DMRS ports (the number of antenna ports is 5) is associated.

FIG. 9B is an example of the table of the antenna port that corresponds to rank 6. In the present example, corresponding to the value of the antenna ports field = 0, the set of DMRS ports (the number of antenna ports is 6) is associated.

### [In the Case in Which the DMRS Type = 2 and the Maximum Length of the DMRS = 2]

When the DMRS type = 2 and the maximum length of the DMRS = 2, the transmission of up to rank 8 may be supported.

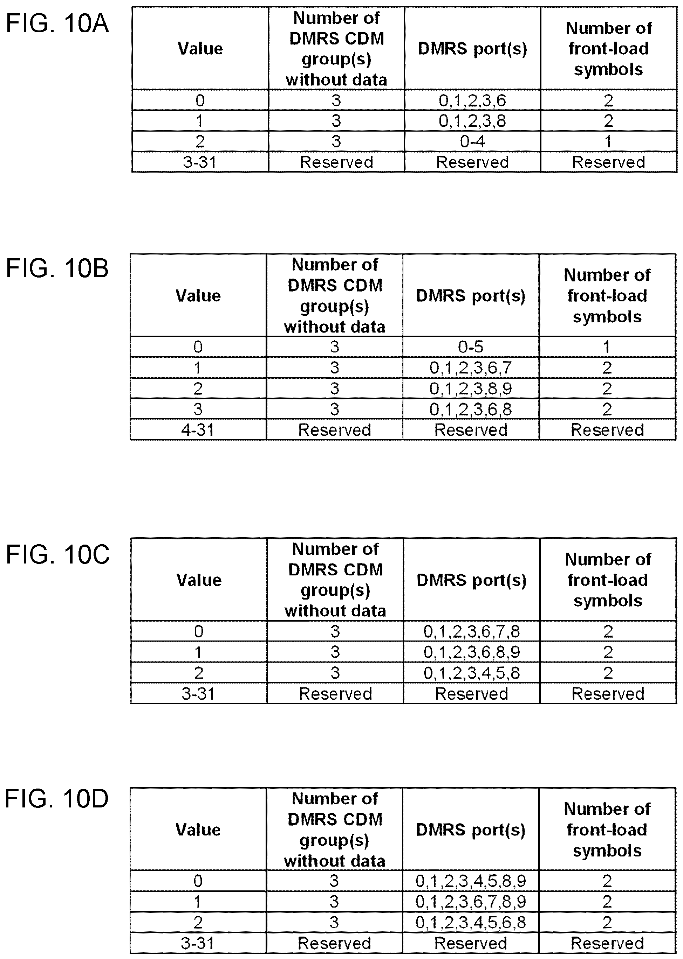

FIGS. 10A through 10D are diagrams to show an example of the table of the antenna port to be referenced when the transform precoder is disabled, the DMRS type = 2, and the maximum length of the DMRS = 2.

FIG. 10A is an example of the table of the antenna port that corresponds to rank 5. In the present example, corresponding to the value of the antenna ports field = 0 to 2, each different set of DMRS ports (the number of antenna ports is 5) is associated.

FIG. 10B is an example of the table of the antenna port that corresponds to rank 6. In the present example, corresponding to the value of the antenna ports field = 0 to 3, each different set of DMRS ports (the number of antenna ports is 6) is associated.

In FIG. 10B, the 4 + 2 layers, the 2 + 4 layers and the 3 + 3 layers may be supported. Note that only the combination of specific X and Y with respect to the X + Y layers (for example, 3 + 3) may be supported. For example, only the entry that corresponds to the value of the antenna ports field = 3 in FIG. 8B may be supported for 3 + 3.

FIG. 10C is an example of the table of the antenna port that corresponds to rank 7. In the present example, corresponding to the value of the antenna ports field = 0 to 2, each different set of DMRS ports (the number of antenna ports is 7) is associated.

FIG. 10D is an example of the table of the antenna port that corresponds to rank 8. In the present example, corresponding to the value of the antenna ports field = 0 to 2, the set of DMRS ports (the number of antenna ports is 8) is associated.

For FIG. 10D, only the entry that corresponds to the 4 + 4 layers may be supported.

According to the DMRS port indication of the number of layers larger than four described above, the antenna port can be properly indicated for the PUSCH that uses the number of layers larger than four when the transform precoder is disabled.

### (Analysis)

As described above, the DMRS port that can handle the number of layers larger than four is under study in preparation for Rel-18 NR. Increasing the number of orthogonal DMRS ports for the PUSCH/PDSCH is also under study in preparation for Rel-18 NR. A new DMRS port that is different from such an existing DMRS port (also referred to as an Rel-15 DMRS port) is also referred to as an Rel-18 DMRS port.

However, when the Rel-18 DMRS ports are introduced, how to indicate the antenna port, how to switch to the Rel-15 DMRS port, etc., have not been fully studied. If these studies are insufficient, the DMRS port may not be properly indicated, which may result in lower communication throughput.

Therefore, the inventors of the present invention came up with the idea of a method of properly determining the DMRS port.

The following is a detailed description of embodiments according to the present disclosure with reference to the drawings. The radio communication method according to each of the embodiments may be applied alone or in combination.

In the present disclosure, "A/B" and "at least one of A and B" may be interchangeably read with each other. In the present disclosure, "A/B/C" may also mean "at least one of A, B and C."

In the present disclosure, notification, activate, deactivate, indicate, select, configure, update, determine, etc., may be interchangeably read with each other. In the present disclosure, support, control, can control, operate, can operate, etc., may be interchangeably read with each other.

In the present disclosure, radio resource control (RRC), RRC parameter, RRC message, higher layer parameter, field, information element (IE), configuration, etc., may be interchangeably read with each other. In the present disclosure, medium access control control element (MAC Control Element (CE)), update command, activation/deactivation command, etc., may be interchangeably read with each other.

In the present disclosure, the higher layer signaling may be, for example, any of radio resource control (RRC) signaling, medium access control (MAC) signaling, broadcast information and the like or a combination thereof.

In the present disclosure, the MAC signaling may use, for example, the MAC control element (MAC CE), an MAC protocol data unit (PDU), etc. The broadcast information may be, for example, a master information block (MIB), a system information block (SIB), minimum system information (Remaining Minimum System Information (RMSI)), other system information (OSI), etc.

In the present disclosure, physical layer signaling may be, for example, the downlink control information (DCI), uplink control information (UCI), etc.

In the present disclosure, index, identifier (ID), indicator, resource ID, etc., may be interchangeably read with each other. In the present disclosure, sequence, list, set, group, family, cluster, subset, etc., may be interchangeably read with each other.

In the present disclosure, panel, UE panel, panel group, beam, beam group, precoder, uplink (UL) transmission entity, transmission/reception point (TRP), base station, spatial relation information (SRI), spatial relation, SRS resource indicator (SRI), control resource set (COntrol REsource SET (CORESET)), physical downlink shared channel (PDSCH), codeword (CW), transport block (TB), reference signal (RS), antenna port (for example, reference signal for demodulation (DeModulation Reference Signal (DMRS)) port), antenna port group (for example, DMRS port group), group (for example, spatial relation group, Code Division Multiplexing (DCM) group, reference signal group, CORESET group, Physical Uplink Control Channel (PUCCH) group, PUCCH resource group), resource (for example, reference signal resource, SRS resource), resource set (for example, reference signal resource set), CORESET pool, downlink transmission configuration indication state (TCI state) (DL TCI state), uplink TCI state (UL TCI state), unified TCI state, common TCI state, quasi co-location (QCL), QCL assumption, etc., may be interchangeably read with each other.

In the present disclosure, the description "Rel. XX" indicates a release of the 3GPP. Note that a release number "XX" is an example and may be replaced by another number

In the present disclosure, DMRS, DL DMRS, UL DMRS, PDSCH DMRS and PUSCH DMRS may be interchangeably read with each other.

In the present disclosure, orthogonal series, OCC, FD OCC and TD OCC may be interchangeably read with each other.

In the present disclosure, DMRS port, antenna port, port and DMRS port index may be interchangeably read with each other. In the present disclosure, DMRS CDM group, CDM group, DMRS group, DMRS CDM group(s) that does not involve data (DMRS CDM group(s) without data), etc. may be interchangeably read with each other. In the present disclosure, antenna port indication and antenna ports field may be interchangeably read with each other. In the present disclosure, DMRS configuration type and DMRS type may be interchangeably read with each other. In the present disclosure, maximum length of the DMRS and number of symbols of the DMRS may be interchangeably read with each other.

In the present disclosure, CDM group list, port group list and list may be interchangeably read with each other. In the present disclosure, CDM group subset, port group subset and group subset may be interchangeably read with each other.

In the present disclosure, rank, transmission rank, number of layers and number of antenna ports may be interchangeably read with each other. One codeword being applied and the number of layers being four or smaller may also be interchangeably read with each other. Two codewords being applied and the number of layers being larger than four may be interchangeably read with each other.

In the present disclosure, "transform precoding being configured" and "transform precoding being configured to be enabled" may be interchangeably read with each other.

Note that in the present disclosure, "having the ability of ..." and "supporting/reporting the ability of ..." may be interchangeably read with each other.

In the present disclosure, a table and one or more tables may be interchangeably read with each other.

The DCI in the following embodiments may mean the DCI that schedules at least one of the PUSCH and the PDSCH (for example, DCI formats 0_x and 1_x (where x is an integer)).

### (Radio Communication Method)

### <First Embodiment>

The first embodiment relates to switching (, selecting or determining) the table of the antenna port for the DMRS port indication (hereinafter also referred to as an antenna port indication table, a DMRS port indication table, a DMRS port table, etc.) based on a specific field of the DCI.

In the first embodiment, the UE may determine (or may be indicated with) the table that is used to reference the antenna ports field from one of the antenna port indication table for the Rel-15 DMRS port (for example, the table in FIGS. 4A through 4D) and the antenna port indication table for the Rel-18 DMRS port (for example, the table in FIGS. 8A through 8D), based on the value of a specific field.

Hereinafter in the present disclosure, for simplicity, the antenna port indication table for the Rel-15 DMRS port is also referred to as an Rel-15 table (or a first table), and the antenna port indication table for the Rel-18 DMRS port is also referred to as an Rel-18 table (or a second table). In the case of the PUSCH DMRS, the Rel-15 table is, but is not limited to, for example, (at least one of) the tables with respect to ranks 1 through 4 shown in FIGS. 3 through 6, and the Rel-18 table is, for example, (at least one of) the tables with respect to ranks 5 through 8 shown in FIGS. 7 through 10.

In the present disclosure, the Rel-18 table may mean the table that can be referenced separately from the Rel-15 table referenced in Rel.15 for a certain set of parameters (for example, a DMRS configuration (for example, the DMRS configuration type, a DMRS mapping type, the maximum length of DMRS, the single/double symbol DMRS) and the PUSCH/PDSCH configuration (the transform precoder, the number of codewords, the rank, etc.)).

For example, the Rel-18 table related to the PUSCH DMRS may mean the table that is different from the table specified in Rel.15 (the Rel-15 table) available for the configuration of whether a certain transform precoder is enabled/disabled, a certain DMRS configuration type, a certain maximum length of DMRS and a certain rank.

For example, in the present disclosure, the Rel-18 table related to the PUSCH DMRS may mean only the antenna port indication table for the DMRS port for rank 5 or higher (for example, the number of layers of 5 to 8), with the same maximum number of DMRS ports as in Rel.15, only the antenna port indication table for the DMRS port for any rank (for example, at least one of the number of layers of 1 to 8), with n (for example, n = 2, 3, 4 ... ) times the maximum number of DMRS ports of the same DMRS configuration in Rel. 15 (for example, the DMRS configuration type, the DMRS mapping type, the single/double symbol DMRS), or both of those tables. n may be specified in advance in a standard or may be configured in the UE by the higher layer signaling.

Note that the UE may be configured by the higher layer signaling (for example, the RRC/MAC CE) or may be specified by the DCI (for example, the specific field described above) to apply the maximum number of DMRS ports that is n times that of Rel.15.

The specific field described above may be at least one of the following:
(1) A new field that does not exist in an existing (for example, Rel-17 NR) DCI field, which may be, for example, referred to as the antenna port indication table field, a maximum antenna port number field, etc.;
(2) Precoding information field/SRI field; and
(3) One or more existing (for example, Rel-17 NR) DCI fields.

For (1) described above, for example, the value of the antenna port indication table field = 0 may indicate the Rel-15 table (or that the maximum number of antenna ports is the same as Rel. 15), and the value of the antenna port indication table field = 1 may indicate the Rel-18 table (or that the maximum number of antenna ports is n times that of Rel. 15).

For (2) described above, the UE may determine the antenna port indication table based on the result of comparing the value of the rank that is determined based on the precoding information field/SRI field with a specific value (for example, 4). For example, the UE may refer to the Rel-18 table when the value of the rank to be determined is larger than the specific value described above and may refer to the Rel-15 table when the value of the rank to be determined is equal to or smaller than the specific value described above.

For (3) described above, the UE may refer to the Rel-18 table when some or all of bit strings of one or more existing DCI fields correspond to a specific (special) bit string, otherwise may refer to the Rel-15 table.

For example, the value of a specific bit (for example, the highest/lowest bit) of the antenna ports field may be used for the switching of the Rel-15/18 table. In this case, the size of the antenna ports field may be extended by x bits (for example, x = 1) compared to the case of the same DMRS configuration (DMRS configuration type, maximum length of DMRS, etc.)/the same PUSCH (PDSCH) configuration (number of codewords, etc.) in Rel. 15/16.

Note that the size of the antenna ports field may be the same regardless of the value of the specific field described above or may vary according to the value of the specific field described above. In the former case, when the largest index (the value of the largest "Value") that is included in the Rel-15 table and the largest index (the value of the largest "Value") that is included in the Rel-18 table are different, the UE may determine that a reserved bit, which may be referred to as a padding bit, is added to the antenna ports field for the table with the smaller one of the largest index out of these tables until it reaches the same size as the antenna ports field for the other. This allows the size of the DCI to be maintained regardless of the value of the specific field described above, enabling the UE to detect such DCI by monitoring the same search space.

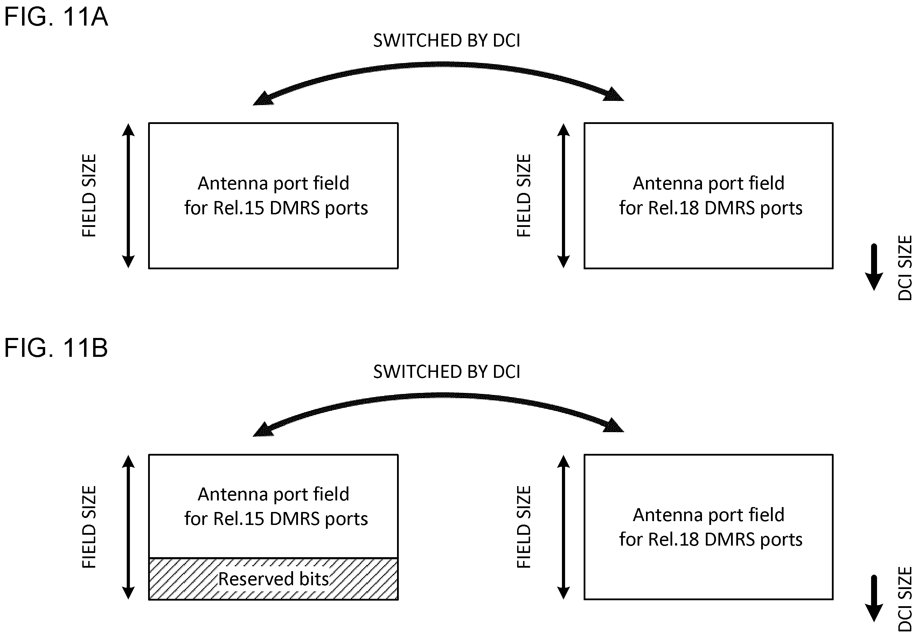

FIGS. 11A and 11B are diagrams to show an example of the size of the antenna ports field in the first embodiment. In the present example, the Rel-15 table or the Rel-18 table is switched by the DCI. The antenna ports field that is included in such DCI corresponds to the antenna ports field for the Rel-15 table or the Rel-18 table that is indicated by such DCI.

FIG. 11A shows the case in which the sizes of the antenna ports field for the Rel-15 table and the antenna ports field for the Rel-18 table are the same. FIG. 11B shows the case in which the size of the antenna ports field for the Rel-15 table is smaller than the size of the antenna ports field for the Rel-18 table. In the case of FIG. 11B, the antenna ports field for the Rel-15 table may consist of the bit string that includes the reserved bit.

Note that the UE may perform the bit padding of the antenna ports field described above only when information that enables dynamic switching of the antenna port indication table is configured by the higher layer signaling. This is because the sizes of the antenna ports field for the Rel-15 table and the antenna ports field for the Rel-18 table do not need to be the same when the dynamic switching is not necessary. By not performing the bit padding, a smaller DCI size can be realized.

According to the first embodiment described above, the antenna port indication table can be dynamically switched based on the DCI.

### <Second Embodiment>

The second embodiment relates to switching the antenna port indication table based on the higher layer signaling (for example, RRC signaling, MAC CE).

In the second embodiment, the UE may determine (or may be indicated with) the table that is used to reference the antenna ports field from one of the Rel-15 table and the Rel-18 table based on the higher layer signaling. For example, such higher layer signaling may indicate one of the following (or enabling one of the following):
- Rel-15 DMRS port (or the Rel-15 table);
- Rel-18 DMRS port (or the Rel-18 table); or
- Dynamic switching (or both the Rel-15 DMRS port (or the Rel-15 table) and the Rel-18 DMRS port (or the Rel-18 table)).

The UE may determine the size of the antenna ports field that is included in the DCI based on the configuration of the higher layer signaling described above.

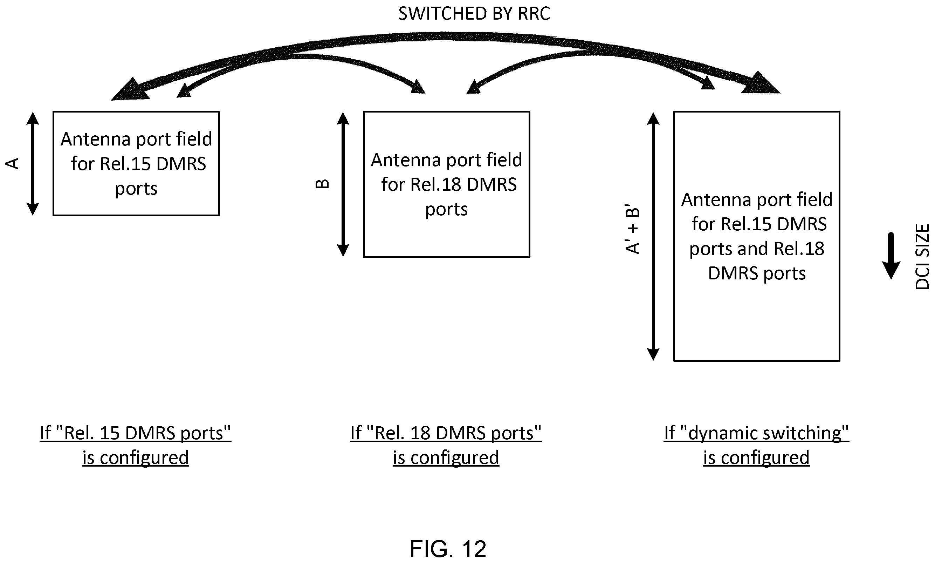

FIG. 12 is a diagram to show an example of the size of the antenna ports field in the second embodiment. In the present example, either the Rel-15 DMRS port, the Rel-18 DMRS port, or the dynamic switching described above is configured for the UE by the RRC.

The UE may determine that when the Rel-15 DMRS port is configured, the antenna ports field is the antenna ports field for the Rel-15 table and the size is A bits (where A is an integer).

The UE may determine that when the Rel-18 DMRS port is configured, the antenna ports field is the antenna ports field for the Rel-18 table and the size is B bits (where B is an integer).

The UE may determine that when the dynamic switching is configured, the antenna ports field is the antenna ports field for the Rel-15 table and the Rel-18 table and the size is A' + B' bits (where A' and B ' are integers).

Note that A' and A may be the same or different. When they are different, the Rel-15 table that can be indicated by the bit string with a size of A' may correspond to a part of the Rel-15 table that can be indicated by the bit string with a size of A (for example, the table from which a part of the string (entry) that includes "Reserved" is omitted).

B' and B may be the same or different. When they are different, the Rel-18 table that can be indicated by the bit string with a size of B' may correspond to a part of the Rel-18 table that can be indicated by the bit string with a size of B (for example, the table from which a part of the string (entry) that includes "Reserved" is omitted).

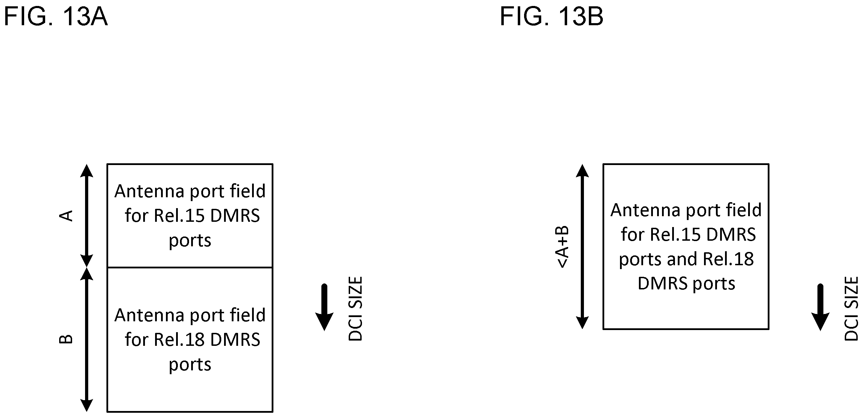

FIGS. 13A and 13B are diagrams to show an example of the size of the antenna ports field in the second embodiment. In the present example, the dynamic switching described above is configured for the UE by the RRC. In the present example, the case in which the transform precoder is disabled, the DMRS type = 1, the maximum length of the DMRS = 2, the Rel-15 tables are FIGS. 4A through 4D, and the Rel-18 tables are FIGS. 8A through 8D is discussed.

FIG. 13A corresponds to the case in which A' = A and B' = B in FIG. 12. Since A = B = 4 bits, the antenna ports field in FIG. 13A is 4 + 4 = 8 bits. However, as shown in FIGS. 4A through 4D, the maximum number of enabled strings (strings that do not include "Reserved") of the Rel-15 table is 14 (rank 1), and as shown in FIGS. 8A through 8D, the maximum number of enabled strings in the Rel-18 table is 4 (rank 5), thus the 8 bits described above are redundant.

FIG. 13B is an example to represent the antenna ports field (A' + B') with 5 bits, considering that the maximum number of strings to be indicated is 14 + 4 = 18. The number of bits is preferably reduced.

According to the second embodiment described above, the antenna port indication table can be dynamically switched based on the DCI.

### <Third Embodiment>

The third embodiment relates to switching the antenna port indication table with respect to the PDSCH DMRS and the method of determining the DMRS port that corresponds to the antenna ports field.

In the first and second embodiments, the switching of the antenna port indication table with respect to the PUSCH DMRS was mainly described. The antenna port indication table with respect to the PUSCH DMRS is defined by rank. The UE determines the DMRS port based on the antenna ports field, with the rank being indicated by the precoding information field (in the case of the codebook-based transmission) or the SRI (in the case of the non-codebook-based transmission) and with reference to the antenna port indication table that corresponds to such rank. For the PUSCH DMRS, the number of DMRS ports is the same as the rank that is indicated.

In contrast, for the PDSCH DMRS, the number of DMRS ports is determined based on the antenna ports field. A different code point of the antenna ports field may correspond to a different number of DMRS ports.

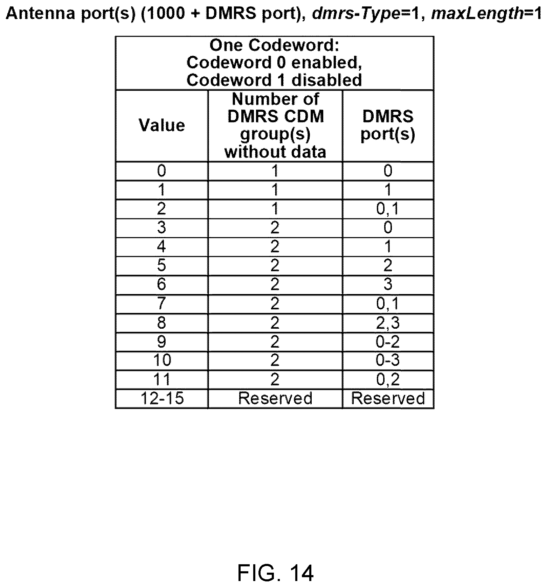

FIG. 14 is a diagram to show an example of the table of the antenna port to be referenced with respect to the PDSCH DMRS in the case in which the DMRS configuration type = 1, and the maximum length of DMRS = 1 in Rel. 15.

The Rel-15 table in FIG. 14 can only show the number of CDM groups ≤ 2 for DMRS configuration type 1. Such an Rel-15 table can also indicate one to four of the DMRS ports with a port numbers (port Index) of 0 through 3. Note that the PDSCH DMRS port number actually corresponds to the value shown in the diagram with 1000 added (the same is true for the subsequent drawings of the antenna port indication table of the PDSCH DMRS).

The UE may receive the DCI related to the PDSCH that includes the value of the antenna port indication (antenna ports field) and may control the reception of the DMRS/PDSCH based on such a value and the association between the number of the CDM groups and the DMRS port (antenna port indication table).

Related to the PDSCH DMRS, the Rel-15 DMRS port may mean the port whose port number corresponds to at least one of the following:
- Port number 1000 through 1007 (In the case of DMRS configuration type 1. The total number of the DMRS ports is 2 (according to the comb/FDM) x 2 (according to the FD OCC) = 4 ports for the single symbol DMRS, and 2 (according to the comb/FDM) x 2 (according to the FD OCC) x 2 (according to the TD OCC) = 8 ports for the double symbol DMRS.); and
- Port number 1000 through 1011 (In the case of DMRS configuration type 2. The total number of the DMRS ports is 3 (according to the FDM) x 2 (according to the FD OCC) = 6 ports for the single symbol DMRS, and 3 (according to the FDM) x 2 (according to the FD OCC) x 2 (according to the TD OCC) = 12 ports for the double symbol DMRS.).

In contrast, related to the PDSCH DMRS, the Rel-18 DMRS port may mean the port whose port number corresponds to at least one of the following:
- Port number is larger than 1007 (for example, the port number of 1008 through 1015) (in the case of DMRS configuration type 1); and
- Port number is larger than 1011 (for example, the port number of 1012 through 1023) (in the case of DMRS configuration type 2).

The antenna port indication table related to the PDSCH DMRS in the third embodiment is described below, but before that, an example of an Rel-18 DMRS port number is shown.

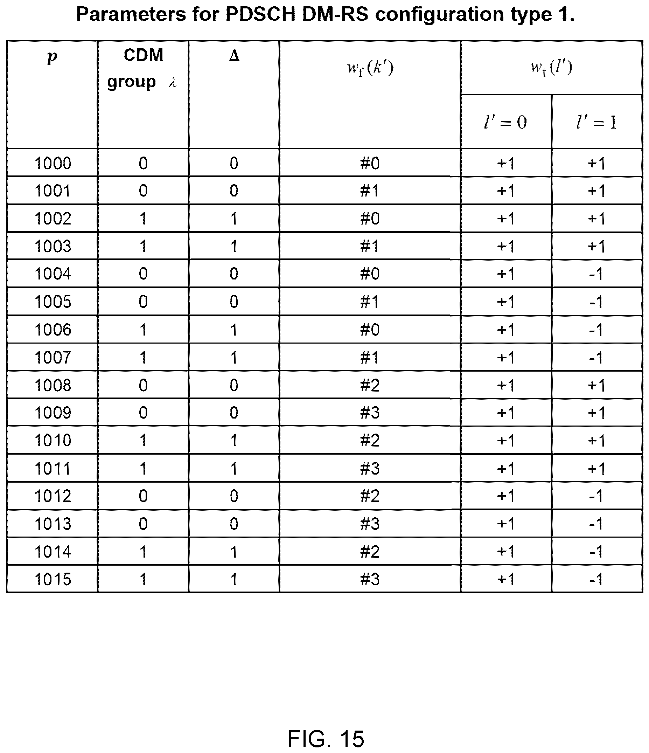

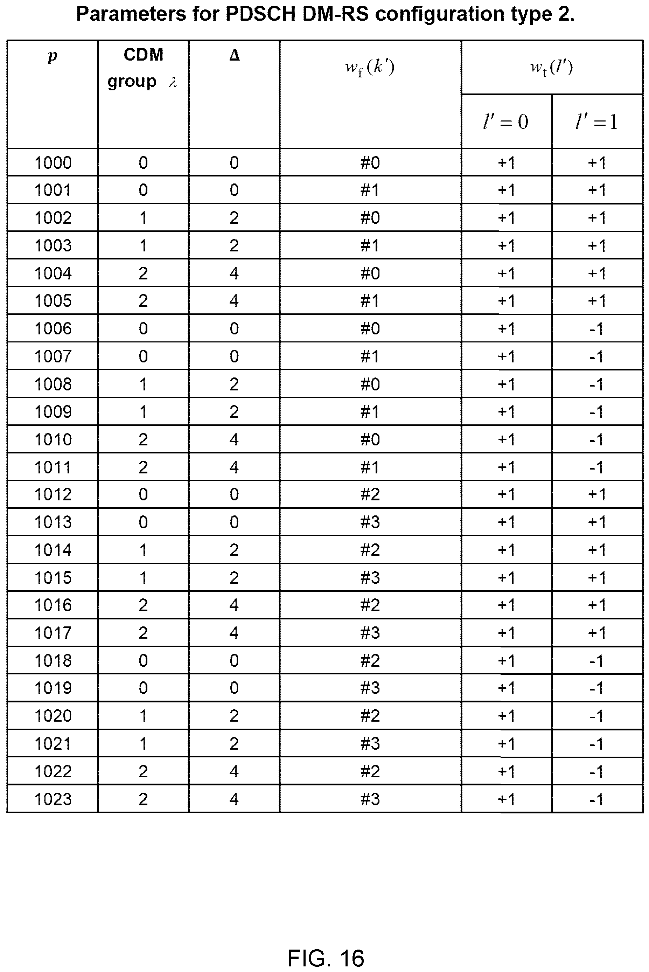

FIG. 15 is a diagram to show an example of the parameters for DMRS configuration type 1 with respect to the Rel-18 DMRS. FIG. 16 is a diagram to show an example of the parameters for DMRS configuration type 2 with respect to the Rel-18 DMRS. In FIG. 15 and FIG. 16, the entry that corresponds to an existing DMRS port index (1000 through 1007 for DMRS configuration type 1 and 1000 through 1011 for DMRS configuration type 2) (including at least one of the CDM group, Δ, the FD OCC and the TD OCC) may not be changed from the correspondence relation of existing parameters (FIG.1, FIG.2).

In other words, FIG. 15 is the table with the entry that corresponds to the Rel-18 DMRS port (port number of 1008 through 1015) added in the correspondence relation for DMRS configuration type 1 in FIG. 1. FIG. 16 is the table with the entry that corresponds to the Rel-18 DMRS port (port number of 1012 through 1023) added in the correspondence relation for DMRS configuration type 2 in FIG. 1.

In the present example, for the single symbol DMRS, port nos. 1000 through 1003 and 1008 through 1011 may be used for FIG. 15, and port nos. 1000 through 1005 and 1012 through 1017 may be used for FIG. 16.

Note that a new FD OCC (w_{f}(k')) may be specified. For example, the FD OCC with a length of 6 (k' = 0 to 5) may be used for DMRS configuration type 1, and the FD OCC with a length of 4 (k' = 0 to 3) may be used for DMRS configuration type 2.

According to the correspondence relations as shown in FIGS. 15 and 16, the implementation of the UE/base station can be simplified. Note that the Rel-18 DMRS port number is not limited to the examples shown in FIGS. 15 and 16.

Note that in the present disclosure, the Rel-18 table related to the PDSCH DMRS may mean the table that is different from the table specified in Rel.15 (the Rel-15 table) that is available for a certain number of codewords, a certain DMRS configuration type and a certain maximum length of DMRS.

For example, the Rel-18 table related to the PDSCH DMRS may mean only the antenna port indication table related to the DMRS port for rank 9 or higher (for example, the number of layers ≤ 12, the number of layers ≤ 16), with the same maximum number of DMRS ports as in Rel.15, only the antenna port indication table for the DMRS port for any rank (for example, the number of layers ≤ 4, the number of layers ≤ 8), with n (for example, n = 2, 3, 4 ... ) times the maximum number of DMRS ports of the same DMRS configuration in Rel. 15 (for example, the DMRS configuration type, the DMRS mapping type, the single/double symbol DMRS), or both of those tables. n may be specified in advance in the standard or may be configured in the UE by the higher layer signaling.

Note that in the present disclosure, the Rel-15/Rel-18 DMRS port number related to the PUSCH DMRS may correspond to the Rel-15/Rel-18 DMRS port number related to the PDSCH DMRS with 1000 subtracted. In other words, the content for the Rel-15/Rel-18 DMRS port number related to the PDSCH DMRS and the content for the Rel-15/Rel-18 DMRS port number related to the PUSCH DMRS of the port number with 1000 subtracted may be interchangeably read with each other.

### [Embodiment 3.1]

In Embodiment 3.1, the antenna ports field of the DCI is used for dynamically switching between the Rel-15 DMRS and the Rel-18 DMRS. A different value of the antenna ports field (different code point) indicates either the Rel-15 DMRS port or the Rel-18 DMRS port.

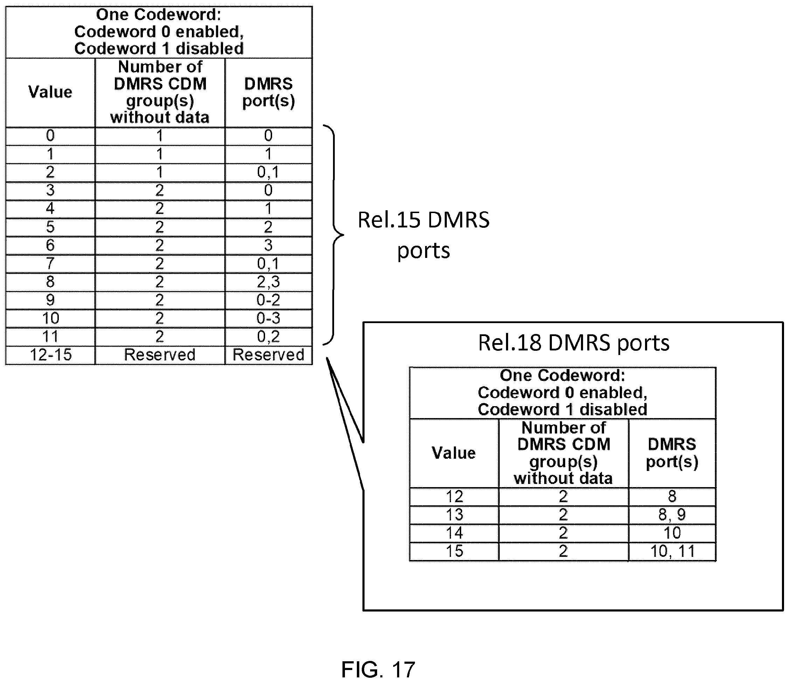

FIG. 17 is a diagram to show an example of the table of the antenna port to be referenced with respect to the PDSCH DMRS in the case in which the DMRS configuration type = 1, and the maximum length of DMRS = 1, according to Embodiment 3.1.

Note that the DMRS configuration (the DMRS configuration type, the maximum length of DMRS, etc.) and the PDSCH configuration (the number of codewords, etc.) in the present example are only examples, and the contents of the present disclosure are not limited to these examples. The following drawings are the same.

In the antenna port indication table in FIG. 17, the values 0 to 11 are the same as in the Rel-15 table in FIG. 14. In contrast, in the present example, the values 12 to 15 do not refer to the string of "Reserved" but to the entry of the correspondence relation of the Rel-18 DMRS port shown in the diagram.

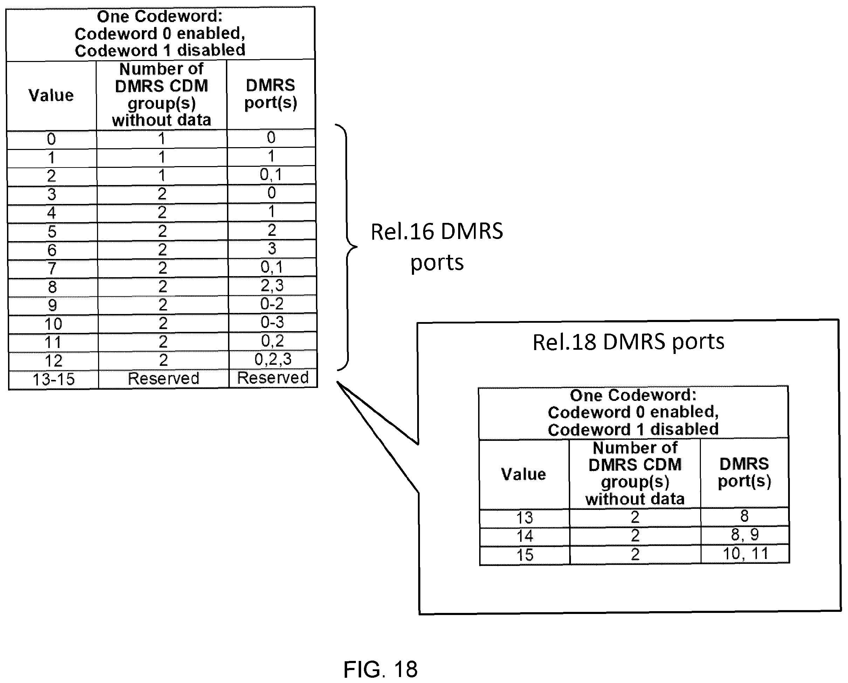

FIG. 18 is a diagram to show an example of the table of the antenna port to be referenced with respect to the PDSCH DMRS in the case in which the DMRS configuration type = 1, and the maximum length of DMRS = 1, according to Embodiment 3.1.

The antenna port indication table on the left side of FIG. 18 is the table used when the UE receives the activation command that maps at least one code point in a transmission configuration indication (TCI) field included in the DCI to two TCI states. In other words, the antenna port indication table on the left side of FIG. 18 is one of the antenna port indication tables that are used in Rel. 16.

In the antenna port indication table in FIG. 18, the values 0 to 12 are the same as one of the antenna port indication tables that are used in Rel. 16. In contrast, in the present example, the values 13 to 15 do not refer to the string of "Reserved" but to the entry of the correspondence relation of the Rel-18 DMRS port shown in the diagram.

Note that in addition to an existing table of Rel. 15/16, the antenna port indication tables for the Rel-18 DMRS port as shown in FIGS. 17 through 18 (for example, the table for values 12 to 15 in the case of FIG. 17) may be specified. In addition to the existing table of Rel. 15/16, the table that is merged with the existing table as shown in FIGS. 17 through 18 and the antenna port indication table for the Rel-18 DMRS port (for example, the table for values 0 to 15 in the case of FIG. 17) may be specified. In the form of replacing the existing table of Rel. 15/16, the table that is merged with the existing table as shown in FIGS. 17 through 18 and the antenna port indication table for the Rel-18 DMRS port (for example, the table for values 0 to 15 in the case of FIG. 17) may be specified.

These new tables/values may be assumed to be configured/indicated only for the UE that is configured with/supports the Rel-18 DMRS.

### [Embodiment 3.2]

Embodiment 3.2 is a variation of Embodiment 3.1. The same points as in Embodiment 3.1 are not repeated. In Embodiment 3.2, the size of the antenna ports field is extended by x bits (for example, x = 1) compared to the case of the same DMRS configuration (DMRS configuration type, maximum length of DMRS, etc.)/the same PDSCH configuration (number of codewords, etc.) in Rel. 15/16. Embodiment 3.2 may be applied when the configuration related to this bit extension is configured in the UE by the higher layer signaling.

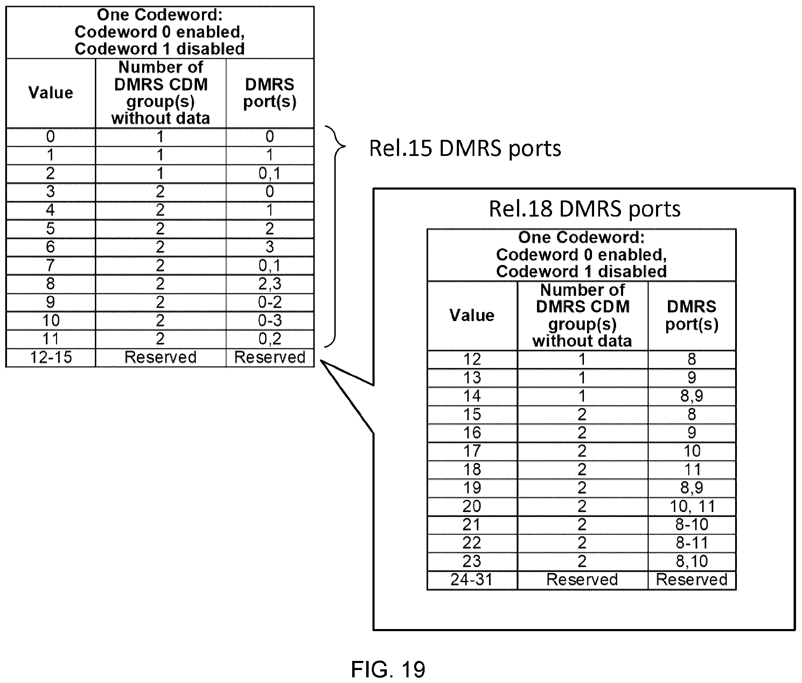

FIG. 19 is a diagram to show an example of the table of the antenna port to be referenced with respect to the PDSCH DMRS in the case in which the DMRS configuration type = 1, and the maximum length of DMRS = 1, according to Embodiment 3.2. In the present example, it is assumed that the above x = 1.

FIG. 19 is similar to FIG. 17 except that extending the antenna ports field by one bit makes the possible value range 0 to 31 and the entry of the correspondence relation of the Rel-18 DMRS port shown in the diagram instead of the string of "Reserved" is referenced for values 12 to 23.

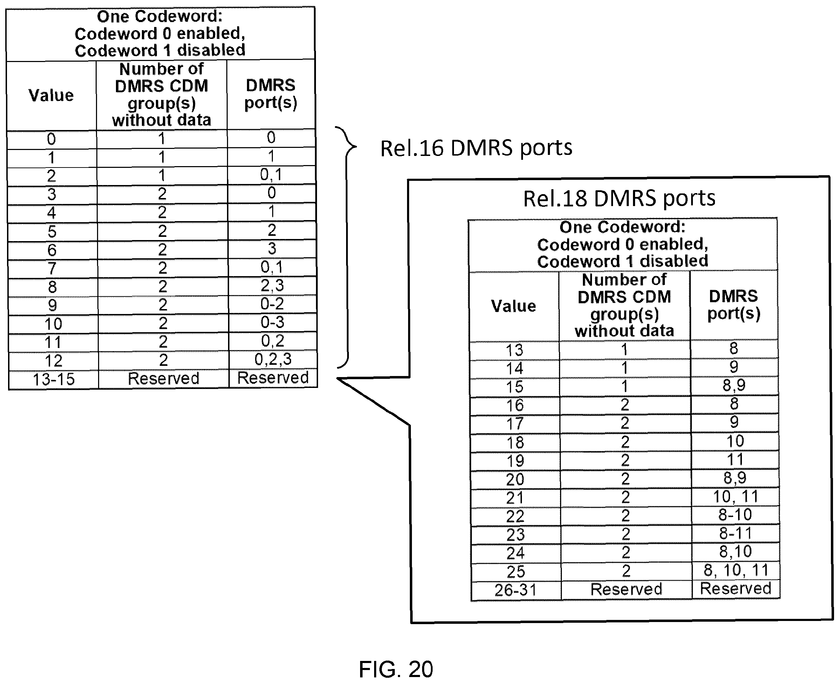

FIG. 20 is a diagram to show an example of the table of the antenna port to be referenced with respect to the PDSCH DMRS in the case in which the DMRS configuration type = 1, and the maximum length of DMRS = 1, according to Embodiment 3.2.

FIG. 20 is similar to FIG. 18 except that extending the antenna ports field by one bit makes the possible value range 0 to 31 and the entry of the correspondence relation of the Rel-18 DMRS port shown in the diagram instead of the string of "Reserved" is referenced for values 13 to 25.

Note that in FIGS. 19 through 20, the correspondence relation of the Rel-18 DMRS port includes, but is not limited to, the entry with each value of the existing Rel-15/16 table with 12 added and each DMRS port index with 8 added. The UE may, for example, use the value configured by the higher layer signaling instead of adding 8.

Note that in addition to the existing table of Rel. 15/16, the antenna port indication table for the Rel-18 DMRS ports as shown in FIGS. 19 through 20 (for example, the table for values 12 to 31 in the case of FIG. 19) may be specified. In addition to the existing table of Rel. 15/16, the table that is merged with the existing table as shown in FIGS. 19 through 20 and the antenna port indication table for the Rel-18 DMRS port (for example, the table for values 0 to 31 in the case of FIG. 19) may be specified.

These new tables/values may be assumed to be configured/indicated only for the UE that is configured with/supports the Rel-18 DMRS.

### [Embodiment 3.3]

Embodiment 3.3 is a variation of Embodiment 3.1/3.2. The same points as in Embodiment 3.1/3.2 are not repeated. In Embodiment 3.3, when the use of a new antenna port indication table is configured by the higher layer signaling (for example, the RRC signaling, the MAC CE), the UE refers to the antenna port indication table that can dynamically switch between the Rel-15 DMRS and the Rel-18 DMRS (hereinafter referred to simply as a table for the dynamic switching) shown in Embodiment 3.1/3.2.

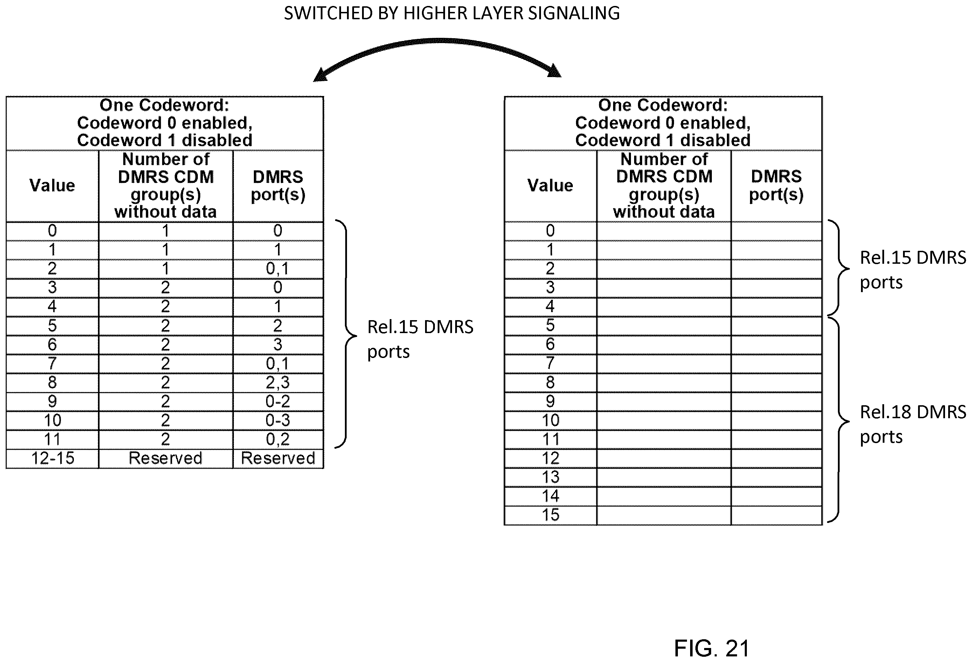

FIG. 21 is a diagram to show an example of the table of the antenna port to be referenced with respect to the PDSCH DMRS in the case in which the DMRS configuration type = 1, and the maximum length of DMRS = 1, according to Embodiment 3.3.

In the present example, the UE may switch between the Rel-15 table (left side) and the table for the dynamic switching (right side) based on the higher layer signaling.

In the table on the right side, values 0 to 4 correspond to the Rel-15 DMRS (for example, one or more combinations of port nos. 0 through 3), and values 5 to 15 correspond to the Rel-18 DMRS (for example, one or more combinations of port nos. 8 through 11).

Note that the table for the dynamic switching (for example, the right side of FIG. 21) may be specified separately from the existing table of Rel. 15/16 (for example, the left side of FIG. 21).

These new tables/values may be assumed to be configured/indicated only for the UE that is configured with/supports the Rel-18 DMRS.

The code point (or the content of the entry) of the table for the dynamic switching may be updated by the higher layer signaling. In this case, the base station can flexibly update the association between the code point of the antenna ports field and the DMRS port. Note that when the size of the antenna ports field does not increase from the existing one, the update described above is preferable, since all of the Rel-15 and Rel-18 DMRS ports cannot be indicated. Note that which DMRS port is most likely to be used is up to the base station (it is likely to depend on each UE to be configured).

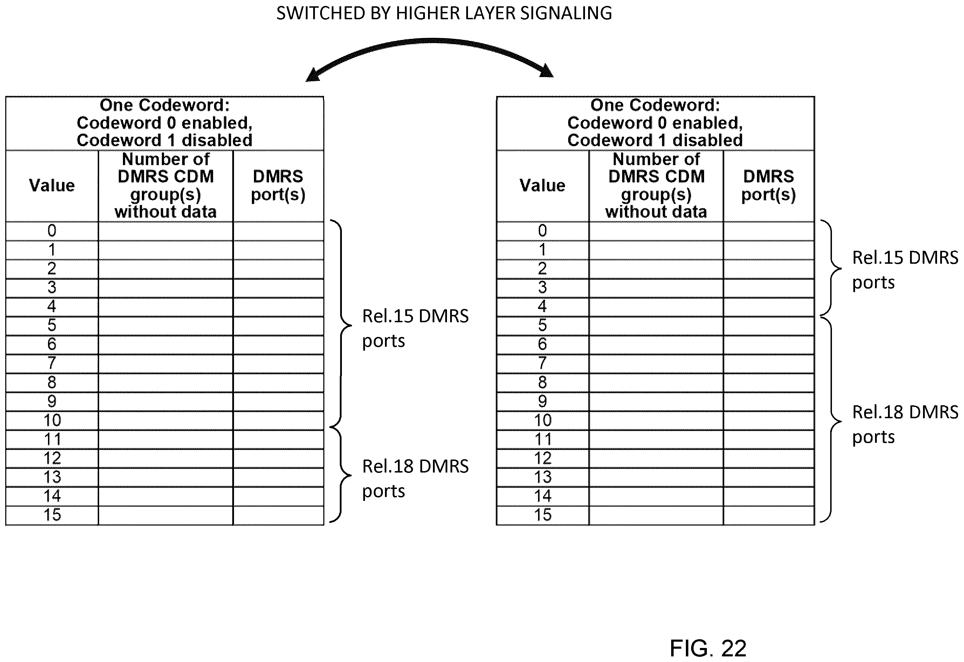

FIG. 22 is a diagram to show an example of the table of the antenna port to be referenced with respect to the PDSCH DMRS in the case in which the DMRS configuration type = 1, and the maximum length of DMRS = 1, according to Embodiment 3.3.

While both tables shown in the diagram are the tables for the dynamic switching, the one on the left side has more rows for the Rel-15 DMRS ports, and the one on the right side has more rows for the Rel-18 DMRS ports. The base station can indicate the Rel-15 DMRS that has higher flexibility (for example, at a finer granularity) by configuring the UE to use the table on the left side. The base station can indicate the Rel-18 DMRS that has higher flexibility (for example, at a finer granularity) by configuring the UE to use the table on the right side.

The update described above may be realized based on at least one of the following:
- Specifying/configuring a plurality of antenna port indication tables, and indicating one of these tables for the UE via the higher layer signaling; and
- Indicating the number of DMRS ports/CDM groups that correspond to the code point of the antenna ports field for the UE via the higher layer signaling.

The latter is explained in more detail below. The "DMRS port" in the following description and the number of DMRS ports/CDM groups may be interchangeably read with each other.

### [[DMRS Port Indication Method 1]]

The higher layer signaling may explicitly indicate one or more DMRS port indices that correspond to the code point (imagine indicating the index of the "DMRS port(s)" that corresponds to the code point (value) in FIGS. 21, 22, etc.). In this case, a high level of flexibility can be realized with respect to the configuration of the table.

### [[DMRS Port Indication Method 2]]

The higher layer signaling may indicate a combination of one or more DMRS port indices that correspond to the code point. In this case, a communication overhead according to the DMRS port indication can be reduced compared to indication method 1 described above.

(A set/list of) The combinations described above may be specified in advance in the standard or may be separately configured for the UE by the higher layer signaling.

The following is an example of using the combination of the value that is included in the antenna port indication table in FIG. 19 and the DMRS port index. In this case, the set of the combinations described above is the values 0 to 23 (24 in total) in FIG. 19.

If the size of the antenna ports field is 4 bits, the value of the antenna port indication table that corresponds to each of the 16 code points in total may be indicated from the 24 values described above by the higher layer signaling. This higher layer signaling may be the number of bits (20 bits) that can indicate the combination of ₂₄C₁₆ or a bitmap (24 bits) that indicates whether each of the combinations of 24 values is included in the code point or not.

Note that when the number of combinations (values) indicated by the higher layer signaling is smaller than the total number of code points (in this case, 16), the UE may assume that the value of the antenna ports field with no corresponding combination indicates "Reserved" by associating the combinations in ascending order starting from the antenna ports field value = 0.

All of the code points may or may not be able to indicate the combination by the higher layer signaling. For example, the combination that corresponds to K (for example, K = 4) of the 16 code points may be specified in a fixed manner, in which case the higher layer signaling may be used to indicate the combination with respect to the 16-K code points.

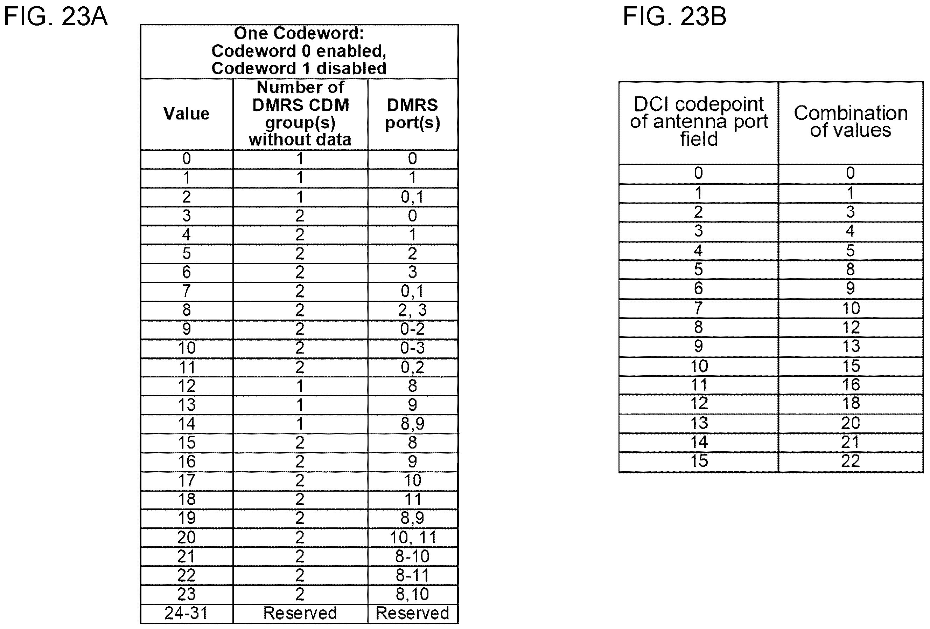

FIGS. 23A and 23B are diagrams to show an example of the correspondence relation between the value of the antenna ports field and the corresponding DMRS port with respect to DMRS port indication method 2 according to the third embodiment.

FIG. 23A is the same table as the antenna port indication table in FIG. 19. In the present example, as shown in FIG. 23B, it is assumed that the association between each of the 4-bit code points and the value in the antenna port indication table in FIG. 23A is configured for the UE using the higher layer signaling. Note that the present example shows but is not limited to the case in which the corresponding value monotonically increases according to the value of the code point of the antenna ports field (in other words, the combination that corresponds to code point i (i is an integer) < the combination that corresponds to code point i + 1).

When the UE determines, for example, that the value of the antenna ports field that is included in the DCI = 8, it processes the DMRS based on DMRS port number 8 that corresponds to the associated value of 12, based on FIG. 23A.

### [[DMRS Port Indication Method 3]]

The higher layer signaling may indicate a start/end index for the Rel-15/18 DMRS port that can be indicated by the antenna ports field out of the values (indices) that are included in the antenna port indication table. This higher layer signaling may indicate the start index and the end index or may indicate the start index as well as the difference (length) between such a start index and the end index. In this case, a communication overhead according to the DMRS port indication can be further reduced compared to indication method 1/2 described above.

Note that the UEs may associate the values of the antenna ports field starting from 0 in ascending order to the Rel-15 (or 18) DMRS starting from the start index to the end index, and the Rel-18 (or 15) DMRS starting from the start index to the end index and may assume that the value of the antenna ports field that does not have a corresponding combination indicates "Reserved."

Note that the end index for the Rel-15/18 DMRS port may not be indicated. For example, when no end index is indicated for the Rel-15 DMRS port, the UE may assume that the end index for the Rel-15 DMRS port is the largest index for the Rel-15 DMRS port that is included in the antenna port indication table. When no end index is indicated for the Rel-18 DMRS port, the UE may assume that the end index for the Rel-18 DMRS port is the largest index for the Rel-18 DMRS port that is included in the antenna port indication table.

The start index for the Rel-15/18 DMRS port may not be indicated either. For example, when no start index is indicated for the Rel-15 DMRS port, the UE may assume that the start index for the Rel-15 DMRS port is the smallest index for the Rel-15 DMRS port that is included in the antenna port indication table. When no start index is indicated for the Rel-18 DMRS port, the UE may assume that the start index for the Rel-18 DMRS port is the smallest index for the Rel-18 DMRS port that is included in the antenna port indication table.

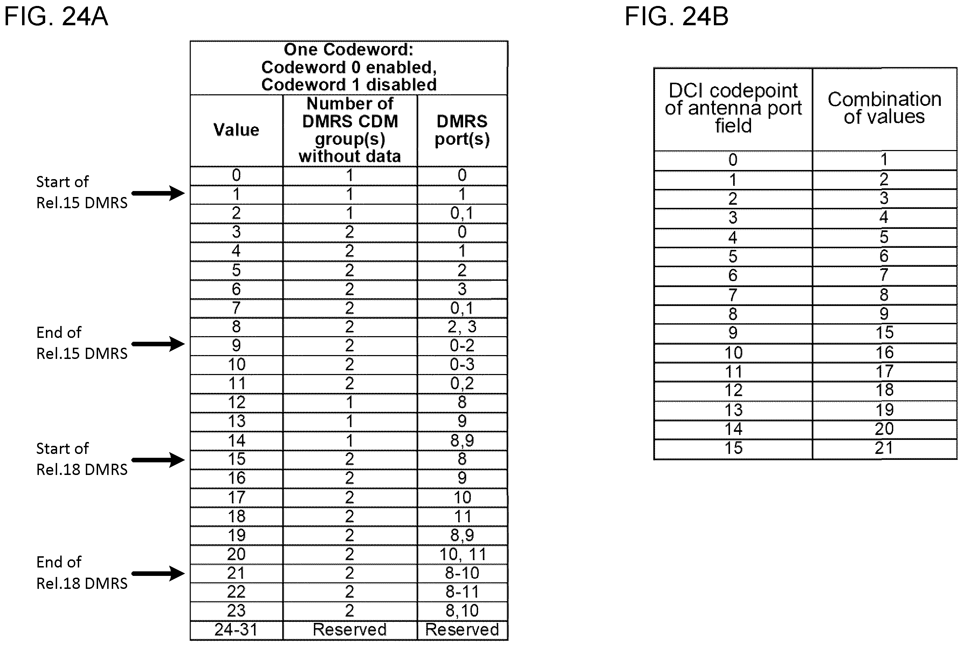

FIGS. 24A and 24B are diagrams to show an example of the correspondence relation between the value of the antenna ports field and the corresponding DMRS port with respect to DMRS port indication method 3 according to the third embodiment.

FIG. 24A is the same table as the antenna port indication table in FIG. 19. In the present example, it is assumed that 1 and 9 are indicated as the start index and the end index for the Rel-15 DMRS, respectively, and 15 and 21 are indicated as the start index and the end index for the Rel. 18 DMRS, respectively (note that even if 21 is not indicated, the result is the same in the present example).

The UE determines the association between each of the 4-bit code points shown in FIG. 24B and the value in the antenna port indication table in FIG. 24A based on the start/end index in FIG. 24A.

### [[DMRS Port Indication Method 4]]

A border index, which may be referred to as a border value, a border, etc., may be configured for the UE by the higher layer signaling, instead of the start/end index. The UE may map the indices from the smallest (or largest) one to the boarder-th one out of the indices that are associated with the Rel-15 DMRS port to the code point of the antenna ports field. The UE may not map the indices from the smallest (or largest) one to the border-th one out of the indices that are associated with the Rel-18 DMRS port to the code points of the antenna ports field but indices from the border+1th one and onward (border-1th and backward) to the code points of the antenna ports field.

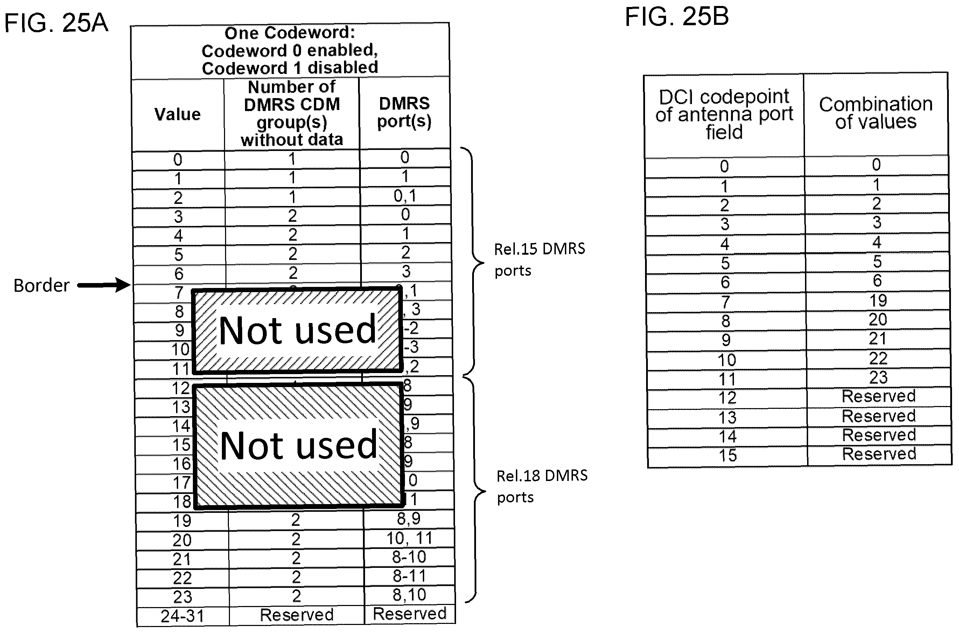

FIGS. 25A and 25B are diagrams to show an example of the correspondence relation between the value of the antenna ports field and the corresponding DMRS port with respect to DMRS port indication method 4 according to the third embodiment.

FIG. 25A is the same table as the antenna port indication table in FIG. 19. In the present example, it is assumed that 7 is indicated as the border (for the Rel-15 DMRS).

The UE determines the association between each of the 4-bit code points shown in FIG. 25B and the value in the antenna port indication table in FIG. 25A based on the border in FIG. 25A. Specifically, the UE maps the indices from the smallest one to the seventh one (in other words, values 0 to 6) out of the indices that are associated with the Rel-15 DMRS port (values 0 to 11) to, for example, the code points 0 through 6. The UE also maps the indices from the 8th smallest one and onward (values 19 to 23) out of the indices that are associated with the Rel-18 DMRS port (values 12 to 23) to, for example, the code points 7 through 11. The rest of the code points 12 through 15 may be mapped to "Reserved."

In FIG. 25B, as shown in FIG. 25A, the indices from the border+1th (= 8th) one and onward (values 7 to 11) out of the indices that are associated with the Rel-15 DMRS port (values 0 to 11) are not used. The indices up to the border-th (= 7th) one (values 12 to 18) out of the indices that are associated with the Rel-18 DMRS port (values 12 to 23) are not used either.

Note that the possible value of the border may range from 0 to the number of indices that are associated with the Rel-15 (or Rel-18) DMRS port with 1 subtracted. In the case of FIG. 25A, the possible value of the border may range from 0 to 11 and can be indicated with 4 bits.

Although indication method 4 is less flexible than other indication methods, it is expected that the communication overhead according to a port indication can be greatly reduced.

According to the third embodiment described above, for the PDSCH DMRS, the Rel-15/18 DMRS port can be properly determined based on the antenna ports field.

### <Fourth Embodiment>

The fourth embodiment relates to switching the antenna port indication table with respect to the PUSCH DMRS and the method of determining the DMRS port that corresponds to the antenna ports field.

The fourth embodiment may correspond to the third embodiment in which the PDSCH (PDSCH DMRS) is interchangeably read as the PUSCH (PUSCH DMRS). It may also correspond to the embodiment in which the contents corresponding to the PDSCH (PDSCH DMRS) (such as the contents of the antenna port indication table) are interchangeably read as the contents corresponding to the PUSCH (PUSCH DMRS). The fourth embodiments that are interchangeably read with Embodiments 3.1 through 3.3 may be referred to as Embodiments 4.1 through 4.3, respectively.

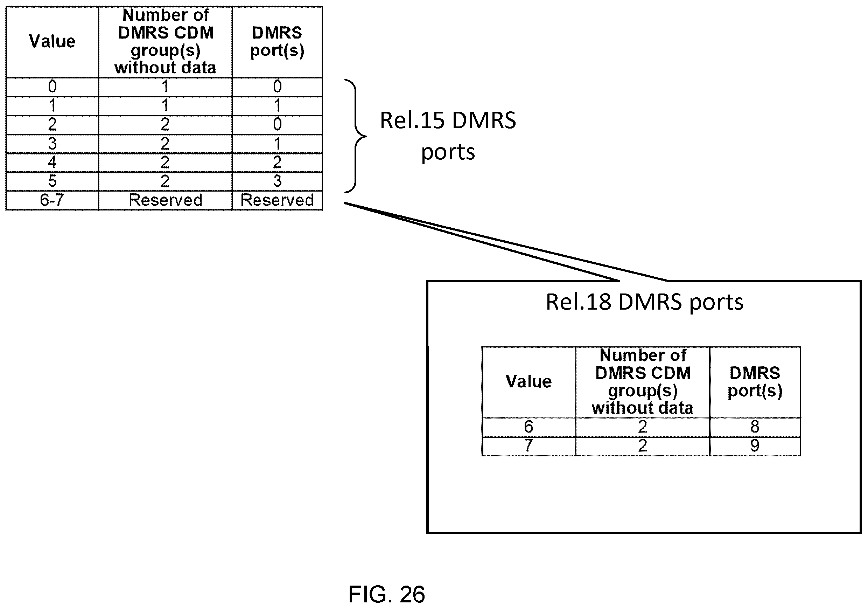

FIG. 26 is a diagram to show an example of the table of the antenna port to be referenced with respect to the PUSCH DMRS in the case in which the DMRS configuration type = 1, the maximum length of DMRS = 1, and the rank = 1, according to Embodiment 4.1.

In the antenna port indication table in FIG. 26, the values 0 to 5 are the same as in the existing Rel-15 table. In contrast, in the present example, the values 6 to 7 do not refer to the string of "Reserved" but to the entry of the correspondence relation of the Rel-18 DMRS port shown in the diagram.

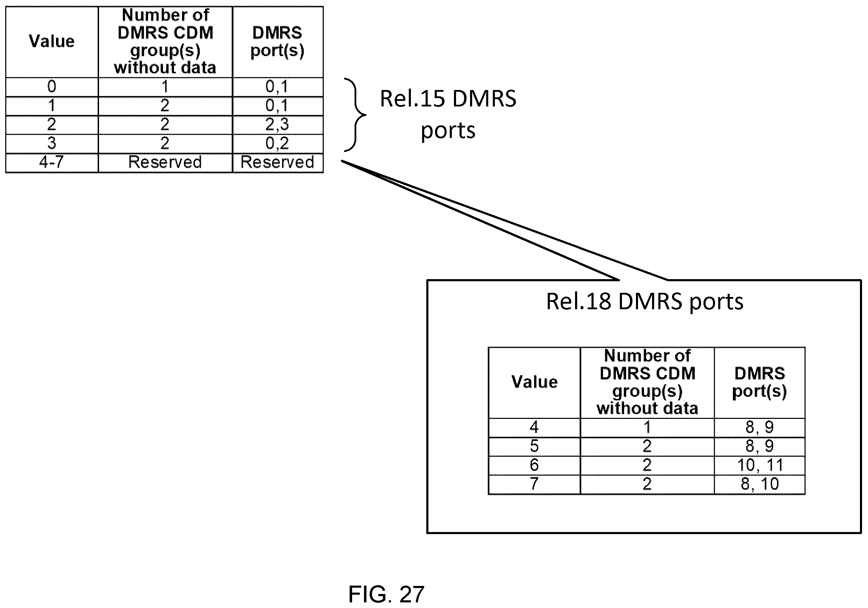

FIG. 27 is a diagram to show an example of the table of the antenna port to be referenced with respect to the PUSCH DMRS in the case in which the DMRS configuration type = 1, the maximum length of DMRS = 1, and the rank = 2, according to Embodiment 4.1.

In the antenna port indication table in FIG. 27, the values 0 to 3 are the same as in the existing Rel-15 table. In contrast, in the present example, the values 4 to 7 do not refer to the string of "Reserved" but to the entry of the correspondence relation of the Rel-18 DMRS port shown in the diagram.

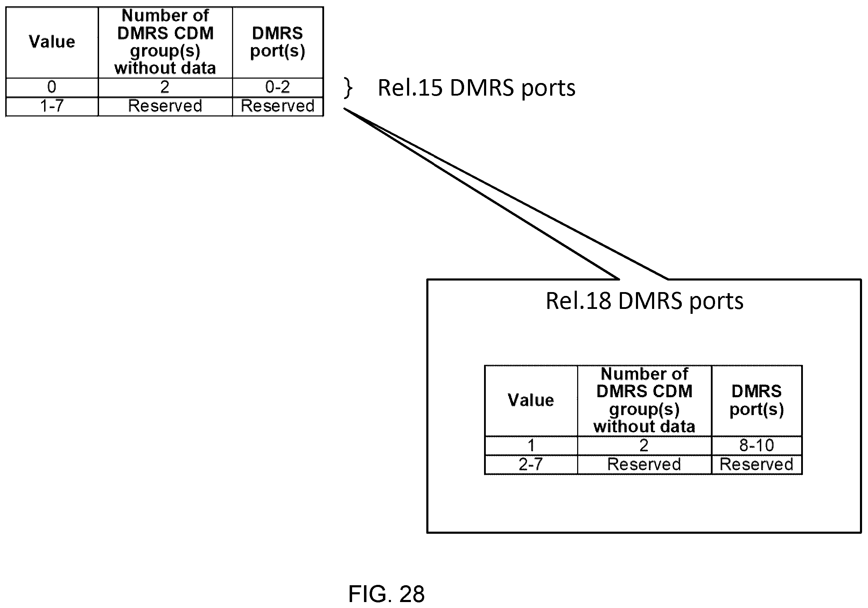

FIG. 28 is a diagram to show an example of the table of the antenna port to be referenced with respect to the PUSCH DMRS in the case in which the DMRS configuration type = 1, the maximum length of DMRS = 1, and the rank = 3, according to Embodiment 4.1.

In the antenna port indication table in FIG. 28, the value 0 is the same as in the existing Rel-15 table. In contrast, in the present example, the value 1 does not refer to the string of "Reserved" but to the entry of the correspondence relation of the Rel-18 DMRS port shown in the diagram.

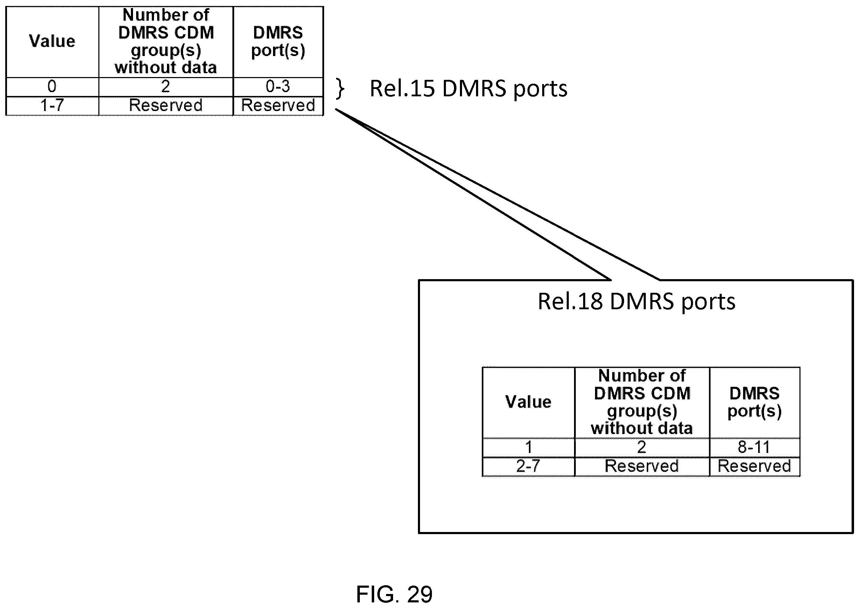

FIG. 29 is a diagram to show an example of the table of the antenna port to be referenced with respect to the PUSCH DMRS in the case in which DMRS configuration type = 1, the maximum length of the DMRS = 1, and the rank = 4, according to Embodiment 4.1.

In the antenna port indication table in FIG. 29, the value 0 is the same as in the existing Rel-15 table. In contrast, in the present example, the value 1 does not refer to the string of "Reserved" but to the entry of the correspondence relation of the Rel-18 DMRS port shown in the diagram.

According to the fourth embodiment described above, for the PUSCH DMRS, the Rel-15/18 DMRS port can be properly determined based on the antenna ports field.

### <Fifth Embodiment>

The fifth embodiment relates to the switching of the antenna port indication table with respect to the PDSCH DMRS.

The fifth embodiment may correspond to the first/second embodiment in which the PUSCH (PUSCH DMRS) is interchangeably read as the PDSCH (PDSCH DMRS), and the contents corresponding to the PUSCH (PUSCH DMRS) (such as the contents of the antenna port indication table) are interchangeably read as the contents corresponding to the PDSCH (PDSCH DMRS).

In the case of DMRS configuration type 1, the UE may determine, based on the DCI, whether the DMRS port that is referenced by the antenna ports field is the Rel-15 DMRS port (port nos. 1000 through 1007) or the Rel-18 DMRS port (port nos. 1008 through 1015).

In the case of DMRS configuration type 2, the UE may determine, based on the DCI, whether the DMRS port that is referenced by the antenna ports field is the Rel-15 DMRS port (port nos. 1000 through 1011) or the Rel-18 DMRS port (port nos. 1012 through 1023).

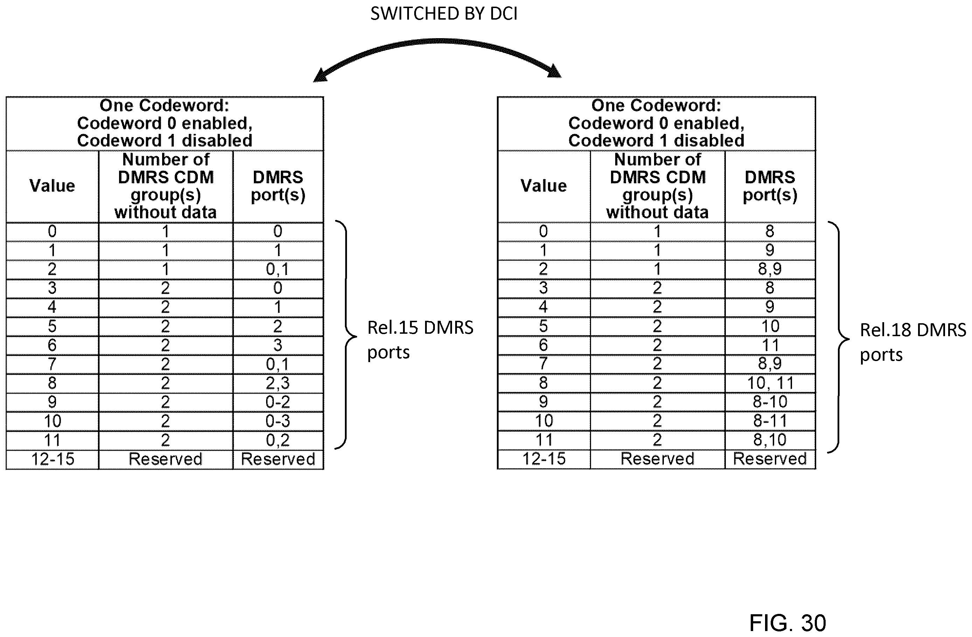

FIG. 30 is a diagram to show an example of switching the antenna port indication table based on the DCI according to the fifth embodiment. In the present example, the Rel-15 table (left side) or the Rel-18 table (right side) is switched by the DCI.

### <Supplemental>

In the present disclosure, the UE/base station's use of (/referring to/processing based on) the table does not only mean the use of such a table itself but may also mean the use of an array, a list, a function, etc. that includes information according to such a table.

### [Port Group Subset]

The Rel-15 DMRS port and the Rel-18 DMRS port are distinguished (identified) by the port number in the embodiments described above but are not limited to this. The Rel-15 DMRS port and the Rel-18 DMRS port may use the same port number but may be defined as belonging to different port group subsets.

For example, for DMRS configuration type 1, the existing Rel-15 DMRS port may be represented as a port with port number 1000 through 1007 of subset #0, and the Rel-18 DMRS port may be represented as a port with port number 1000 through 1007 of subset #1.

For DMRS configuration type 2, the existing Rel-15 DMRS port may be represented as a port with port number 1000 through 1011 of subset #0, and the Rel-18 DMRS port may be represented as a port with port number 1000 through 1011 of subset #1.

When using the concept of the port group subset, a new correspondence relation of parameters, the new antenna port indication table, etc. may not be used, and the correspondence relation of the existing parameters (FIG. 1 and FIG. 2), an existing antenna port indication table, etc. may be used.

### [Notification of Information to the UE]

The notification of any information (from the network (NW) (for example, the base station (BS))) to the UE (in other words, a reception of any information from the BS by the UE) in the embodiments described above may be performed using the physical layer signaling (for example, the DCI), the higher layer signaling (for example, the RRC signaling or the MAC CE), a specific signal/channel (for example, the PDCCH, the PDSCH or the reference signal) or a combination thereof.

When the notification described above is performed by the MAC CE, such an MAC CE may be identified based on the inclusion of a new logical channel ID (LCID) that is not specified in an existing standard in an MAC subheader.

When the notification described above is performed by the DCI, the notification described above may be performed by the specific field of such DCI, a radio network temporary identifier (RNTI) used to scramble cyclic redundancy check (CRC) bits that are attached to such DCI, the format of such DCI, etc.

The notification of any information to the UE in the embodiments described above may be performed in a periodic, semi-persistent or aperiodic manner.

### [Notification of Information from the UE]

The notification of any information from the UE (to the NW) (in other words, the transmission/reporting of any information to the BS by the UE) in the embodiments described above may be performed using the physical layer signaling (for example, the UCI), the higher layer signaling (for example, the RRC signaling or the MAC CE), the specific signal/channel (for example, the PUCCH, the PUSCH, a PRACH or the reference signal) or a combination thereof.

When the notification described above is performed by the MAC CE, such an MAC CE may be identified based on the inclusion of the new LCID that is not specified in the existing standard in the MAC subheader.

When the notification described above is performed by the UCI, the notification described above may be transmitted using the PUCCH or the PUSCH.

The notification of any information from the UE in the embodiments described above may be performed in a periodic, semi-persistent or aperiodic manner.

### [For the Application of Each of the Embodiments]

At least one of the embodiments described above may be applied when specific conditions are met. Such specific conditions may be specified in the standard or notified to the UE/BS using the higher layer signaling/physical layer signaling.

At least one of the embodiments described above may be applied only to the UE that has reported a specific UE capability or the UE that supports such a specific UE capability.

Such a specific UE capability may indicate at least one of the following:
- to support a specific process/operation/control/information for at least one of the embodiments described above; and
- to support the dynamic switching of the Rel-15 DMRS port (table) and the Rel-18 DMRS port (table).

The specific UE capability described above may also be a capability that applies across all frequencies (in common regardless of frequency), a capability for each frequency (for example, one or a combination of cell, band, band combination, BWP, component carrier, etc.), a capability for each frequency range (for example, Frequency Range 1 (FR1), FR2, FR3, FR4, FR5, FR2-1 and FR2-2), a capability for each subcarrier spacing (SCS), or a capability for each feature set (FS) or feature set per component-carrier (FSPC).

The specific UE capability described above may also be a capability that applies across all duplex systems (in common regardless of duplex system) or a capability for each duplex system (for example, time division duplex (TDD) and frequency division duplex (FDD)).

At least one of the embodiments described above may also be applied when the UE is configured/activated/triggered with specific information related to the embodiments described above (or to perform an operation of the embodiments described above) by the higher layer signaling/physical layer signaling. For example, such specific information may be information indicating an activation of the dynamic switching of the DMRS port, information indicating an activation of the dynamic switching of the DMRS port of a specific release (for example, the Rel-15 DMRS port and the Rel-18 DMRS port), information indicating an activation of the dynamic switching of the antenna port indication table, any RRC parameters for the specific release (for example, the Rel-18/19 DMRS), etc.

When the UE does not support at least one of the specific UE capabilities described above or is not configured with the specific information described above, the UE may apply the operation of, for example, Rel. 15/16.

### (Supplementary Note)

Regarding one embodiment of the present disclosure, the following supplementary notes of the invention will be given.

### {Supplementary Note 1}

A terminal including:
a receiving section that receives downlink control information (DCI) for scheduling an uplink shared channel; and
a control section that selects an antenna port indication table related to a demodulation reference signal (DMRS) port indication for the uplink shared channel from a plurality of tables with respect to a certain rank, based on a specific field of the DCI.

### {Supplementary Note 2}

The terminal according to supplementary note 1, wherein the specific field is a field that explicitly indicates the antenna port indication table.

### (Supplementary Note)

Regarding one embodiment of the present disclosure, the following supplementary notes of the invention will be given.

### {Supplementary Note 1}

A terminal including:
a receiving section that receives downlink control information (DCI) for scheduling an downlink shared channel; and
a control section that refers to an antenna port indication table related to a DMRS port indication for the downlink shared channel, the antenna port indication table including a column including a port number equal to or less than 1007 and a column including a port number equal to or more than 1008 for a demodulation reference signal (DMRS) configuration type 1, or including a column including a port number equal to or less than 1011 and a column including a port number equal to or more than 1012 for a DMRS configuration type 2, determines a DMRS port for the downlink shared channel, based on an antenna port field of the DCI.

### {Supplementary Note 2}

The terminal according to supplementary note 1, wherein the control section determines a correspondence relationship between a code point of the antenna port field and a corresponding DMRS port, based on higher layer signaling.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

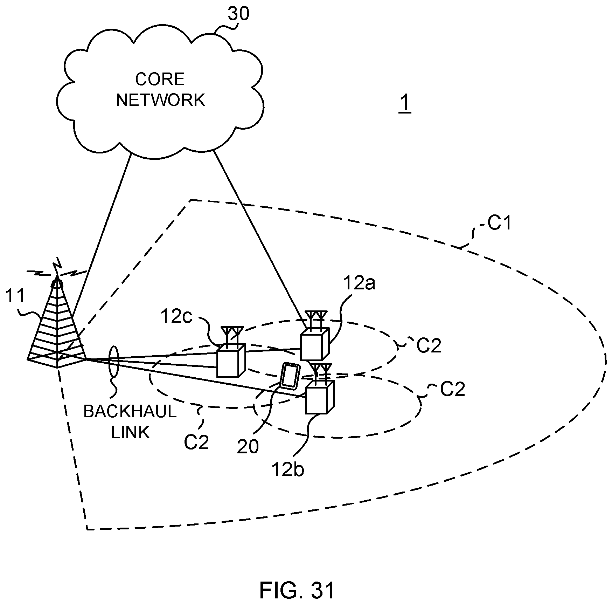

FIG. 31 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR), and so on the specifications of which have been drafted by the Third Generation Partnership Project (3GPP).

The radio communication system 1 (which may be referred to simply as a system 1) may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UFM), Application Function (AF), Data Network (DN), Location Management Function (LMF), and operation, administration and maintenance (management) (OAM), for example. Note that a plurality of functions may be provided by one network node. Communication with an external network (for example, the Internet) may be performed via DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

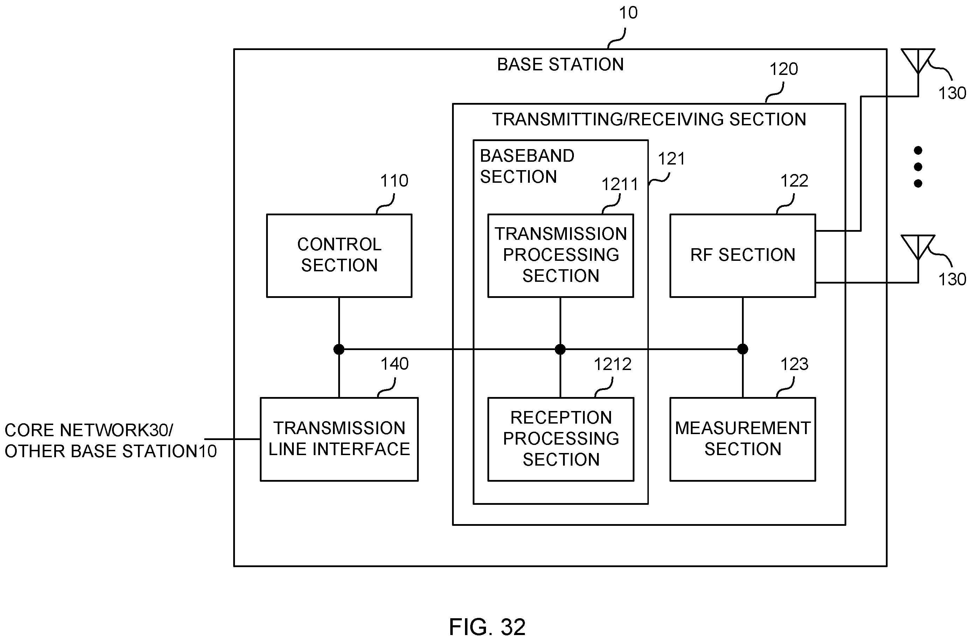

FIG. 32 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit downlink control information (DCI) for scheduling an uplink shared channel to the user terminal 20. The control section 110 may determine a DMRS port for the uplink shared channel based on an antenna port indication table related to a demodulation reference signal (DMRS) port indication for the uplink shared channel, the antenna port indication table being selected from a plurality of tables with respect to a certain rank, based on a specific field of the DCI.

Note that the transmitting/receiving section 120 may transmit downlink control information (DCI) for scheduling a downlink shared channel to the user terminal 20. The control section 110 may determine, based on an antenna port indication table related to a DMRS port indication for the downlink shared channel, the antenna port indication table including a column including a port number equal to or less than 1007 and a column including a port number equal to or more than 1008 for a demodulation reference signal (DMRS) configuration type 1, or including a column including a port number equal to or less than 1011 and a column including a port number equal to or more than 1012 for a DMRS configuration type 2, a DMRS port for the downlink shared channel corresponding to an antenna port field of the DCI.

### (User Terminal)

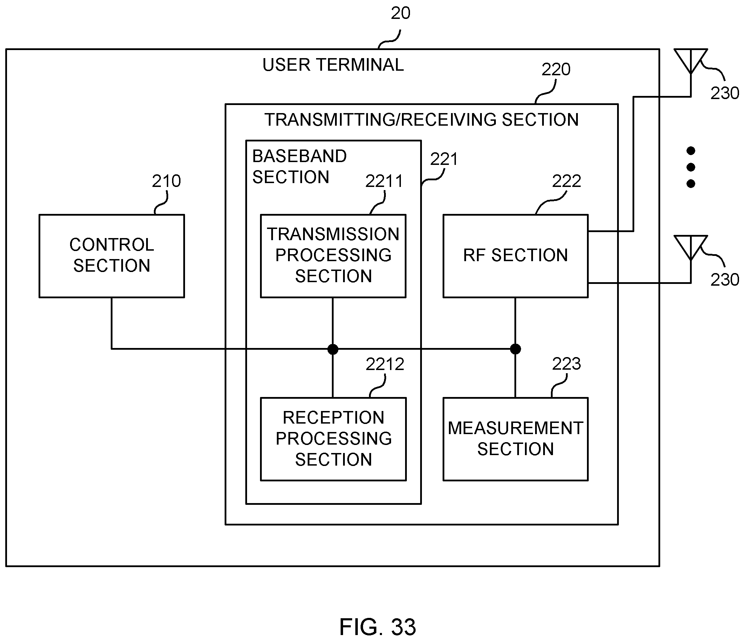

FIG. 33 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive downlink control information (DCI) for scheduling an uplink shared channel. The control section 210 may select an antenna port indication table related to a demodulation reference signal (DMRS) port indication for the uplink shared channel from a plurality of tables with respect to a certain rank, based on a specific field of the DCI.

The specific field may be a field that explicitly indicates the antenna port indication table.

Note that the transmitting/receiving section 220 may receive downlink control information (DCI) for scheduling a downlink shared channel. The control section 210 may refer to an antenna port indication table related to a DMRS port indication for the downlink shared channel, the antenna port indication table including a column including a port number equal to or less than 1007 and a column including a port number equal to or more than 1008 for a demodulation reference signal (DMRS) configuration type 1, or including a column including a port number equal to or less than 1011 and a column including a port number equal to or more than 1012 for a DMRS configuration type 2, to determine a DMRS port for the downlink shared channel, based on an antenna port field of the DCI.

The control section 210 may determine a correspondence relationship between a code point of the antenna port field and a corresponding DMRS port, based on higher layer signaling.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

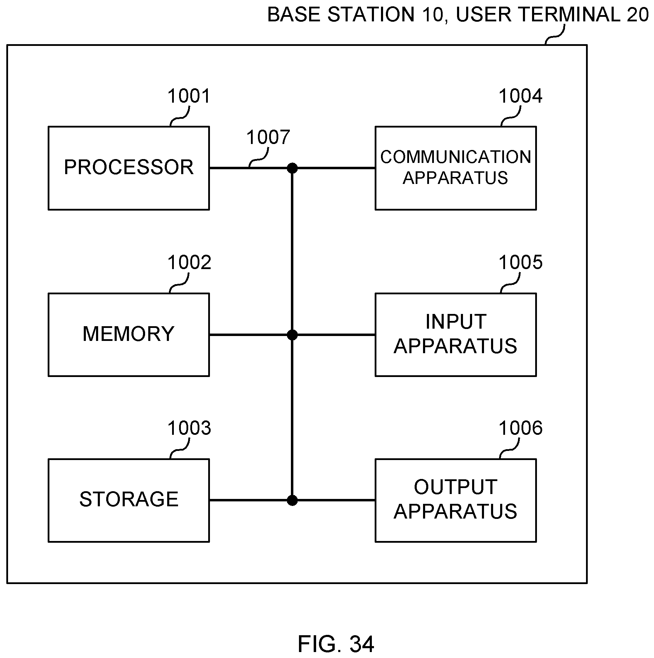

For example, a base station, a user terminal, and so on according to one embodiment of the present disclosure may function as a computer that executes the processes of the radio communication method of the present disclosure. FIG. 34 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

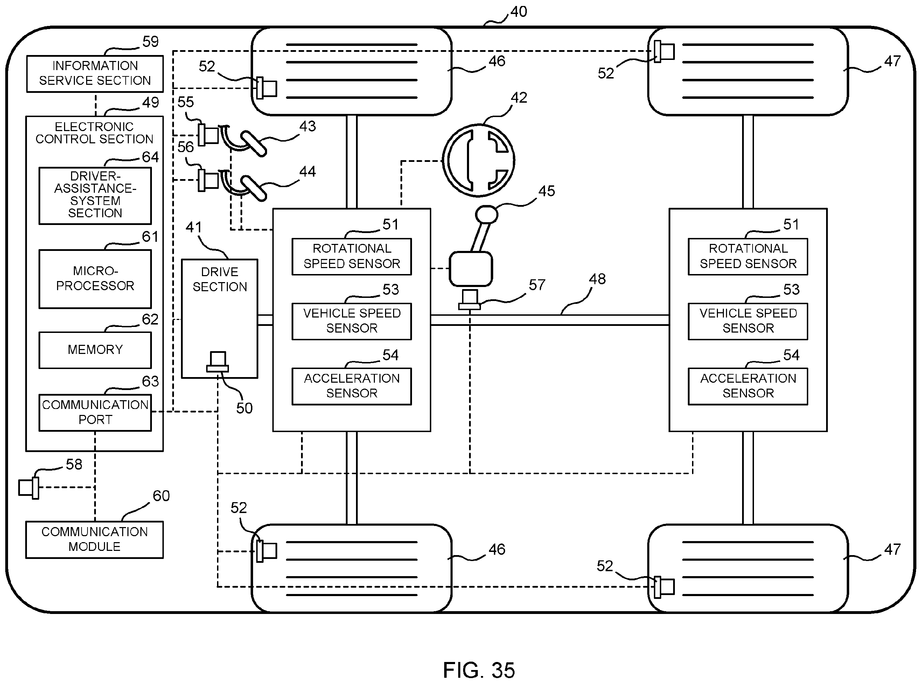

FIG. 35 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives downlink control information (DCI) for scheduling an uplink shared channel; and
a control section that selects an antenna port indication table related to a demodulation reference signal (DMRS) port indication for the uplink shared channel from a plurality of tables with respect to a certain rank, based on a specific field of the DCI.

2. The terminal according to claim 1, wherein
the specific field is a field that explicitly indicates the antenna port indication table.

3. A radio communication method for a terminal, comprising:
receiving downlink control information (DCI) for scheduling an uplink shared channel; and
selecting an antenna port indication table related to a demodulation reference signal (DMRS) port indication for the uplink shared channel from a plurality of tables with respect to a certain rank, based on a specific field of the DCI.

4. A base station comprising:
a transmitting section that transmits downlink control information (DCI) for scheduling an uplink shared channel to a terminal; and
a control section that determines a DMRS port for the uplink shared channel based on an antenna port indication table related to a demodulation reference signal (DMRS) port indication for the uplink shared channel, the antenna port indication table being selected from a plurality of tables with respect to a certain rank, based on a specific field of the DCI.
